# EUROPEAN PATENT APPLICATION

(11) **EP 4 557 778 A1**
(43) Date of publication of application: **21.05.2025**
(21) Application number: 23851323.8
(22) Date of filing: 26.05.2023
(51) Int. Cl.: H04W 4/02, H04W 64/00

(54) **NETWORK ELEMENT HANDOVER METHOD, APPARATUS, AND SYSTEM**

(30) Priority: 10.08.2022 CN 202210958115
(71) Applicant: Huawei Technologies Co., Ltd., Shenzhen, Guangdong 518129 (CN)
(72) Inventor: LI, Guanglei, Shenzhen, Guangdong 518129 (CN); HU, Xiaodong, Shenzhen, Guangdong 518129 (CN); ZONG, Zaifeng, Shenzhen, Guangdong 518129 (CN); JIA, Jianxin, Shenzhen, Guangdong 518129 (CN)
(74) Representative: Goddar, Heinz J.
(86) International application number: PCT/CN2023/096601
(87) International publication number: WO 2024/032095

(57) **Abstract**

Embodiments of this application provide a network element switching method, an apparatus, and a system, and pertain to the field of communication technologies. The method is used to reduce a locating delay of a subsequent locating service of a terminal on a user plane secure connection. This solution includes: A first mobility management network element obtains first information, where the first information is used to determine that a first user plane secure connection exists between a first LMF network element and a terminal; determines that a location of the terminal is updated; and when the terminal is located outside a service range of the first LMF network element, and determining, based on the first information, that the terminal has the first user plane secure connection, the first mobility management network element selects a second LMF network element for the terminal. In this solution, the first mobility management network element may perceive existence of the first user plane secure connection, so that an LMF network element can be switched for the terminal in a timely manner after the terminal moves. In this way, a user plane secure connection between the terminal and a switched LMF network element is established in advance before the terminal needs to be located subsequently, to reduce a delay.

## Description

This application claims priority to Chinese Patent Application No. 202210958115.6, filed with the China National Intellectual Property Administration on August 10, 2022 and entitled "NETWORK ELEMENT SWITCHING METHOD, APPARATUS, AND SYSTEM", which is incorporated herein by reference in its entirety.

### TECHNICAL FIELD

Embodiments of this application relate to the field of communication technologies, and in particular, to a network element switching method, an apparatus, and a system.

### BACKGROUND

With the advent of the 5G era, both to customer (ToC) services and services sold to organizations and enterprises (ToB services) have high requirements for locating services. A plurality of locating manners are defined in 5G to meet locating requirements of users from a meter-level to a submeter-level. These locating manners are currently implemented through a control plane of a 5G core (5G core, 5GC) network, for example, a lightweight presentation protocol (lightweight presentation protocol, LPP) used for exchanging location measurement information and location estimation between a terminal and a location management function (location management function, LMF) network element. Currently, a non-access stratum (non-access stratum, NAS) protocol is used for bearing. In 3GPP R18, architecture enhancement starts to be researched to support user plane-based locating. In other words, LPP messages between terminals and LMF network elements are exchanged on a user plane, to reduce load of control-plane signaling and a locating delay. To exchange the LPP message through the user plane, the terminal needs to establish a session or use one established protocol data unit (protocol data unit, PDU) session, and the PDU session provides a PDU connection service between the terminal and a data network (data network, DN) element. Then, the terminal establishes a user plane secure connection with an LMF network element based on the established session, for example, establishes one user plane secure connection with the LMF network element according to the transport layer security (transport layer security, TLS) protocol.

Usually, when the terminal needs to be located, a mobility management network element triggers the LMF network element to locate the terminal, and then the user plane secure connection is established between the LMF network element and the terminal to locate the terminal. Usually, when the LMF network element completes locating of the terminal through the user plane secure connection (in other words, there is no locating service), or when a location of the terminal is moved out of a service range of the LMF network element, the user plane secure connection is released. When a locating service requirement exists next time, an AMF network element triggers the LMF network element to locate the terminal again, and the LMF network element and the terminal perform a process of re-establishing a user plane secure connection. However, in this solution, although locating of a subsequent locating service of the terminal can be implemented, before next locating of a locating service, re-establishing the user plane secure connection causes a locating delay.

### SUMMARY

Embodiments of this application provide a network element switching method, an apparatus, and a system. The method is used to reduce a locating delay of a subsequent locating service of a terminal on a user plane secure connection.

According to a first aspect, an embodiment of this application provides a network element switching method, including: A first mobility management network element obtains first information used to determine that a first user plane secure connection exists between a first location management function LMF network element and a terminal. The first user plane secure connection is used to perform transmission of a message related to user plane locating between the first LMF network element and the terminal. The first mobility management network element determines that a location of the terminal is updated. When the location of the terminal is outside a service range of the first LMF network element, and the first information indicates the first user plane secure connection exists, the first mobility management network element selects a second LMF network element for the terminal, and the terminal is located in a service range of the second LMF network element.

An embodiment of this application provides a network element switching method. In the method, the first mobility management network element obtains the first information, so that the first mobility management network element learns that the first user plane secure connection exists between the terminal and the first LMF network element. In this way, after the location of the terminal is updated, if the location of the terminal is outside the service range of the first LMF network element, and the first information indicates that the first user plane secure connection exists, the first LMF network element indicates, to the first mobility management network element, that the first user plane secure connection exists, and it indicates that the terminal further needs to be located through the first user plane secure connection subsequently. Therefore, the first mobility management network element may switch to an LMF network element (for example, the second LMF network element) for the terminal in a timely manner, so that before a subsequent locating service arrives, the terminal and the second LMF network element already have a user plane secure connection. In this way, in comparison with the conventional technology in which establishment of the user plane secure connection is triggered after a location request arrives, this can reduce a locating delay.

In a possible implementation of this application, the first LMF network element is an LMF network element that can provide a service for the terminal before the location of the terminal is updated. In other words, before the location of the terminal is updated, the location of the terminal is located in the service range of the first LMF network element. Optionally, when the terminal has a locating dedicated DNN, the first LMF network element is an LMF network element supporting the locating dedicated DNN.

In a possible implementation of this application, before the first mobility management network element obtains the first information, the method provided in this embodiment of this application further includes: The first mobility management network element sends a sixth request message and/or the locating dedicated data network name DNN of the terminal to the first LMF network element. The sixth request message is used to request a status of a user plane secure connection between the first LMF network element and the terminal.

Optionally, the sixth request message may be a subscription request message, or may be a message other than the subscription request message. This is not limited in this embodiment of this application. In an example, the sixth request message may further carry an identifier of the terminal. In this way, the first LMF network element determines that the sixth request message requests a status of a user plane secure connection between the first LMF network element and which terminal. This is because one LMF network element may have user plane secure connections to a plurality of terminals.

Optionally, the sixth request message may further include address information of the first mobility management network element, so that the first LMF network element determines a reporting object.

Optionally, the first mobility management network element may further send user plane capability information of the terminal to the first LMF network element, so that the first LMF network element determines that the terminal supports the user plane locating, and establishes the first user plane secure connection with the terminal before the terminal is subsequently located. In other words, the terminal is located by using a user plane locating method.

In a possible implementation of this application, before the first mobility management network element obtains the first information, the method provided in this embodiment of this application further includes: The first mobility management network element sends a first request message to the first LMF network element. The first request message is used to request the first LMF network element to locate the terminal. Optionally, the first request message includes the sixth request message and/or the locating dedicated data network name DNN of the terminal. The sixth request message and/or the locating dedicated data network name DNN of the terminal is carried in the first request message. In this way, in a process in which the first mobility management network element notifies the first LMF network element of locating the terminal, the first mobility management network element may request the first LMF network element to provide a status of a user plane secure connection.

It may be understood that the first request message is used to request the first mobility management network element to perform user plane locating on the terminal. For example, when the first mobility management network element obtains the user plane capability information of the terminal, and the user plane capability information indicates that the terminal supports the user plane locating, the first mobility management network element sends, to the first LMF network element, the first request message for requesting the first mobility management network element to perform user plane locating on the terminal. Optionally, the first request message may further carry indication information, to indicate the first LMF network element to perform user plane locating on the terminal. Optionally, the indication information may be the user plane capability information of the terminal and/or an indicator. The indicator indicates to perform user plane locating on the terminal.

In a possible implementation of this application, after the first mobility management network element obtains the first information, the method provided in this embodiment of this application further includes: The first mobility management network element sends a second request message to the first LMF network element. The second request message is used to request a status of the first user plane secure connection between the terminal and the first LMF network element. The first mobility management network element receives second information from the first LMF network element. The second information indicates that the first user plane secure connection between the first LMF network element and the terminal does not exist. Based on the second information, the first mobility management network element updates the first information to the second information, or deletes the first information. This is because after the first mobility management network element obtains the first information, the location of the terminal may change, or the first user plane secure connection may be released due to a decision of the first LMF network element. In this case, although the first information indicates that the first user plane secure connection exists, the first user plane secure connection is actually released. Therefore, sending the second request message after the first information is obtained can ensure that the status of the first user plane secure connection is consistent with an actual status.

In a possible implementation of this application, after the location of the terminal is updated, the first mobility management network element sends the second request message to the first LMF network element.

Certainly, optionally, in a possible implementation of this application, after the first mobility management network element obtains the first information, the method provided in this embodiment of this application further includes: The first mobility management network element receives the second information from the first LMF network element. It may be understood that the second information is proactively sent by the first LMF network element to the first mobility management network element, or may be sent to the first mobility management network element based on triggering of the second request message. This is not limited in this embodiment of this application. It may be understood that when the first LMF network element determines to release the first user plane secure connection with the terminal, determines that the terminal has released the first user plane secure connection, or determines that load of the first LMF network element is greater than a first load threshold, the first LMF network element may release the first user plane secure connection, and then proactively send the second information to the first mobility management network element.

In a possible implementation of this application, before the first mobility management network element obtains the first information, the method provided in this embodiment of this application further includes: The first mobility management network element obtains user plane locating capability information of the terminal. The first mobility management network element obtains subscription information of the terminal from a UDM network element serving the terminal. The subscription information includes the locating dedicated data network name DNN of the terminal. The first mobility management network element determines, based on the user plane locating capability information and the locating dedicated data network name DNN, an LMF network element supporting the locating dedicated data network name (data network name, DNN) as the first LMF network element. Optionally, when determining to locate the terminal, the first mobility management network element determines the first LMF network element for the terminal by using the foregoing solution.

In a possible implementation of this application, before the first mobility management network element obtains the first information, the method provided in this embodiment of this application further includes: The first mobility management network element obtains the user plane locating capability information of the terminal. The first mobility management network element determines the first LMF network element for the terminal based on the user plane locating capability information and the location of the terminal.

In a possible implementation of this application, before the first mobility management network element obtains the first information, the method provided in this embodiment of this application further includes: The first mobility management network element sends a third request message to the first LMF network element. The third request message is used to request the first LMF network element to perform user plane locating on the terminal. The third request message includes the locating dedicated data network name DNN.

In a possible implementation of this application, that a first mobility management network element obtains first information includes: The first mobility management network element obtains a context of the terminal from a second mobility management network element. The context of the terminal includes the first information, and the second mobility management network element is a network element that provides a service for the terminal before the terminal accesses the first mobility management network element. In this solution, when the location of the terminal is updated, and consequently, a mobility management network element accessed by the terminal changes from the second mobility management network element to the first mobility management network element, the first mobility management network element switches an LMF network element for the terminal to reduce a delay of a subsequent locating service of the terminal.

In a possible implementation of this application, that a first mobility management network element obtains first information includes: The first mobility management network element obtains the first information from the first LMF network element.

In a possible implementation of this application, before the first mobility management network element obtains the first information, the method provided in this embodiment of this application further includes: The first mobility management network element obtains the user plane locating capability information of the terminal and the subscription information of the terminal. The subscription information includes the locating dedicated data network name DNN of the terminal, and the user plane locating capability information indicates that the terminal supports the user plane locating. The first mobility management network element sends a fourth request message to the terminal based on the user plane locating capability information of the terminal and the subscription information of the terminal. The fourth request message is used to trigger establishment of a locating dedicated PDU session between the terminal and the locating dedicated DNN. In this solution, establishment of a dedicated PDU session between the terminal and the locating dedicated DNN can be triggered, so that a locating delay of subsequent locating can be reduced

In a possible implementation of this application, before the first mobility management network element determines that the location of the terminal is updated, the method provided in this embodiment of this application further includes: The first mobility management network element stores first user plane information of the terminal. The first user plane information includes the first information and an identifier of the first LMF network element.

In a possible implementation of this application, the first information is at least one of first indication information and a user plane locating method indication. The user plane locating method indication indicates to locate the terminal by using a user plane locating method. The first indication information indicates that the first user plane secure connection exists between the terminal and the first LMF network element. It may alternatively be understood that the first indication information indicates that the status of the first user plane secure connection is a maintained state. If the status of the first user plane secure connection is the maintained state, it indicates that the first user plane secure connection needs to be used to subsequently locate the subsequent locating service of the terminal. In an example, the first indication information is user plane locating indication information. The user plane positioning indication information is a first indicator, and indicates that the first user plane secure connection exists. The second information is a second indicator, and indicates that the first user plane secure connection does not exist.

In a possible implementation of this application, after the first mobility management network element selects the second LMF network element for the terminal, the method provided in this embodiment of this application further includes: The first mobility management network element receives a first notification message from the second LMF network element. The first notification message notifies that a second user plane secure connection between the second LMF network element and the terminal is released (which may also be understood as that the second user plane secure connection does not exist). The first mobility management network element deletes second user plane information of the terminal. The second user plane information includes third information and an identifier of the second LMF network element. The third information indicates that the second user plane secure connection exists between the terminal and the second LMF network element, or a status of the second user plane secure connection is the maintained state. Optionally, after receiving the first notification message, the first mobility management network element may update the status of the second user plane secure connection from the maintained state to a released state.

In a possible implementation of this application, before the first mobility management network element obtains the first information, the method provided in this embodiment of this application further includes: The first mobility management network element sends a second notification message to a session management network element accessed by the terminal. The second notification message includes information related to the second LMF network element, and the second notification message is used to trigger the session management network element to determine whether the second LMF network element is reachable to a first user plane network element of the terminal. The information related to the second LMF network element includes the identifier of the second LMF network element and/or a DNAI associated with a UPF network element corresponding to the second LMF network element, and the first user plane network element corresponds to the first LMF network element. The second notification message is sent to the session management network element, so that when determining that the second LMF network element is unreachable to the first user plane network element, the session management network element triggers, for the terminal, switching to the second user plane network element in a timely manner. In this way, the terminal can subsequently access the second LMF network element by using the second user plane network element. In other words, the second LMF network element is reachable to the second user plane network element.

In a possible implementation of this application, first configuration information is configured in the first mobility management network element. The first configuration information indicates that a service range of an LMF network element serving the terminal falls within a service range of a user plane network element accessed by the terminal. That the first mobility management network element selects a second LMF network element for the terminal includes: The first mobility management network element obtains, from the session management network element accessed by the terminal, information about a second user plane network element selected by the session management network element for the terminal. The first mobility management network element determines, based on a service range of the second user plane network element, an LMF network element whose service range falls within the service range of the second user plane network element as the second LMF network element. In this way, it can be ensured that when a user plane network element of the terminal is switched from the first user plane network element to the second user plane network element, the second LMF network element selected for the terminal is reachable to the second user plane network element. Certainly, it may be understood that, when the user plane network element of the terminal is not switched, in other words, when the location of the terminal is updated, but a user plane network element serving the terminal is still the first user plane network element, the first mobility management network element may determine, based on a service range of the first user plane network element, an LMF network element whose service range falls within the service range of the first user plane network element as the second LMF network element.

Certainly, optionally, when determining the first LMF network element for the terminal, the first mobility management network element may alternatively select an LMF network element located in the service range of the first user plane network element as the first LMF network element.

In a possible implementation of this application, after the first mobility management network element selects the second LMF network element for the terminal, the method provided in this embodiment of this application further includes: The first mobility management network element sends a fourth request message to the first LMF network element. The fourth request message is used to request to transfer the first user plane secure connection with the terminal to the second LMF network element. The fourth request message includes information about the second LMF network element. In this way, the first LMF network element triggers, in a timely manner, the first LMF network element to transfer the first user plane secure connection to the second LMF network element.

According to a second aspect, an embodiment of this application provides a network element switching method, applied to a first location management function LMF network element. A first user plane secure connection exists between the first LMF network element and a terminal, and the method provided in this embodiment of this application includes: The first LMF network element locates a first locating service of the terminal through the first user plane secure connection. The first LMF network element sends first information to a first mobility management network element accessed by the terminal. The first information is used to determine that the first user plane secure connection exists between the first LMF network element and the terminal, and the first user plane secure connection is used to perform transmission of a message, for example, an LPP message, related to user plane locating between the first LMF network element and the terminal.

In a possible implementation of this application, before the first LMF network element locates the first locating service of the terminal through the first user plane secure connection, the method provided in this embodiment of this application further includes: The first LMF network element receives a first request message from the first mobility management network element. The first request message is used to request the first LMF network element to locate the terminal, and the first request message includes information about a locating dedicated data network of the terminal and/or a subscription request message. A first subscription request message indicates that the first mobility management network element requests to subscribe to a status of a user plane secure connection between the first LMF network element and the terminal.

In a possible implementation of this application, after the first LMF network element sends the first information to the first mobility management network element accessed by the terminal, the method provided in this embodiment of this application further includes: The first LMF network element receives a second request message from the first mobility management network element. The second request message is used to request a status of the first user plane secure connection between the first LMF network element and the terminal.

In a possible implementation of this application, the method provided in this embodiment of this application further includes: before the first LMF network element establishes the first user plane secure connection with the terminal, the first LMF network element sends, to the terminal, a first identifier allocated to the terminal, where the first identifier is used to identify the terminal. The first LMF network element establishes the first user plane secure connection with the terminal based on the first identifier.

In a possible implementation of this application, the first information is at least one of first indication information and a user plane locating method indication. The user plane locating method indication indicates to locate the terminal by using a user plane locating method. The first indication information indicates that the first user plane secure connection exists between the terminal and the first LMF network element.

In a possible implementation of this application, the method provided in this embodiment of this application further includes: The first LMF network element determines information about a second LMF network element serving the terminal. The first LMF network element sends a fifth request message to the second LMF network element. The fifth request message includes a subscription request message of the first mobility management network element, and the subscription request message indicates that the first mobility management network element requests to subscribe to a status of a user plane secure connection between the first LMF network element and the terminal. In other words, it may be understood that the subscription request message is used to request whether the user plane secure connection exists between the terminal and the first LMF network element.

In a possible implementation of this application, that the first LMF network element determines information about a second LMF network element serving the terminal includes: The first LMF network element receives a fourth request message from the first mobility management network element. The fourth request message is used to request to transfer the first user plane secure connection with the terminal to the second LMF network element, and the fourth request message includes the information about the second LMF network element.

In a possible implementation of this application, that the first LMF network element determines information about a second LMF network element serving the terminal includes: The first LMF network element determines, based on a user plane context of the terminal, the information about the second LMF network element serving the terminal.

In a possible implementation of this application, the first locating service is a locating service of a reachable event type of the terminal. In other words, when determining that the first locating service is a locating service of the reachable event type, the first LMF network element may send the first information to the first mobility management network element, to indicate that the first user plane secure connection exists.

According to a third aspect, an embodiment of this application provides a communication method. The method includes: A terminal sends user plane locating capability information of the terminal to a first mobility management network element. The user plane locating capability information indicates that the terminal supports user plane locating. The terminal receives a fourth request message from the first mobility management network element. The fourth request message is used to trigger establishment of a locating dedicated PDU session between the terminal and a locating dedicated DNN. The terminal establishes the locating dedicated PDU session with the locating dedicated DNN based on the fourth request message.

According to a fourth aspect, an embodiment of this application provides a communication method. The method includes: A session management network element receives a second notification message from a first mobility management network element. The second notification message includes information related to a second LMF network element, and the second notification message is used to trigger the session management network element to determine whether the second LMF network element is reachable to a first user plane network element of the terminal. When determining that the second LMF network element is unreachable to the first user plane network element, the session management network element determines a second user plane network element for the terminal. The second LMF network element is reachable to the second user plane network element.

Optionally, after determining the second user plane network element for the terminal, the session management network element may further trigger the terminal to switch a PDU session between the terminal and the first user plane network element to a PDU session between the terminal and the second user plane network element.

According to a fifth aspect, an embodiment of this application provides a communication apparatus. The communication apparatus can implement the method according to any one of the first aspect or the possible implementations of the first aspect, and therefore can also implement beneficial effects according to any one of the first aspect or the possible implementations of the first aspect. The communication apparatus may be a first mobility management network element, or may be an apparatus that supports the first mobility management network element in implementing the method according to any one of the first aspect or the possible implementations of the first aspect, for example, a chip used in the first mobility management network element. The communication apparatus may implement the foregoing method by software or hardware, or by executing corresponding software by hardware.

In an example, an embodiment of this application provides a communication apparatus. The communication apparatus is a first mobility management network element or a chip used in the first mobility management network element. The communication apparatus includes a communication unit and a processing unit. The processing unit is configured to process information. The communication unit is configured to receive or send information. For example, the communication unit is configured to perform the receiving/sending steps performed by the first mobility management network element in the first aspect or the possible implementations of the first aspect. The processing unit is configured to perform the processing steps performed by the first mobility management network element in the first aspect or the possible implementations of the first aspect.

For example, when the communication apparatus is a chip or a chip system in the first mobility management network element, the processing unit may be a processor, and the communication unit may be a communication interface. For example, the communication interface may be an input/output interface, a pin, or a circuit. The processing unit executes instructions stored in a storage unit, to enable the first mobility management network element to implement the network element switching method according to any one of the first aspect or the possible implementations of the first aspect. The storage unit may be a storage unit (for example, a register or a cache) in the chip, or may be a storage unit (for example, a read-only memory or a random access memory) that is in the first mobility management network element and that is outside the chip.

According to a sixth aspect, an embodiment of this application provides a communication apparatus. The communication apparatus can implement the method according to any one of the second aspect or the possible implementations of the second aspect, and therefore can also implement beneficial effects according to any one of the second aspect or the possible implementations of the second aspect. The communication apparatus may be a first LMF network element, or may be an apparatus that supports the first LMF network element in implementing the method according to any one of the second aspect or the possible implementations of the second aspect, for example, a chip used in the first LMF network element. The communication apparatus may implement the foregoing method by software or hardware, or by executing corresponding software by hardware.

In an example, an embodiment of this application provides a communication apparatus. The communication apparatus is a first LMF network element or a chip used in the first LMF network element. The communication apparatus includes a communication unit and a processing unit. The processing unit is configured to process information. The communication unit is configured to receive or send information. For example, the communication unit is configured to perform the receiving/sending steps performed by the first LMF network element in the first aspect or the possible implementations of the first aspect. The processing unit is configured to perform the processing steps performed by the first LMF network element in the first aspect or the possible implementations of the first aspect.

For example, when the communication apparatus is a chip or a chip system in the first LMF network element, the processing unit may be a processor, and the communication unit may be a communication interface. For example, the communication interface may be an input/output interface, a pin, or a circuit. The processing unit executes instructions stored in a storage unit, to enable the first LMF network element to implement the network element switching method according to any one of the second aspect or the possible implementations of the second aspect. The storage unit may be a storage unit (for example, a register or a cache) in the chip, or may be a storage unit (for example, a read-only memory or a random access memory) that is in the first LMF network element and that is outside the chip.

According to a seventh aspect, an embodiment of this application provides a computer-readable storage medium. The computer-readable storage medium stores a computer program or instructions. When the computer program or the instructions are run on a computer, the computer is enabled to perform the network element switching method according to any one of the first aspect and the possible implementations of the first aspect.

According to an eighth aspect, an embodiment of this application provides a computer-readable storage medium. The computer-readable storage medium stores a computer program or instructions. When the computer program or the instructions are run on a computer, the computer is enabled to perform the network element switching method according to any one of the second aspect and the possible implementations of the second aspect.

According to a ninth aspect, an embodiment of this application provides a computer-readable storage medium. The computer-readable storage medium stores a computer program or instructions. When the computer program or the instructions are run on a computer, the computer is enabled to perform the network element switching method according to any one of the third aspect and the possible implementations of the third aspect.

According to a tenth aspect, an embodiment of this application provides a computer-readable storage medium. The computer-readable storage medium stores a computer program or instructions. When the computer program or the instructions are run on a computer, the computer is enabled to perform the network element switching method according to any one of the fourth aspect and the possible implementations of the fourth aspect.

According to an eleventh aspect, an embodiment of this application provides a computer program product including instructions. When the instructions are run on a computer, the computer is enabled to perform the network element switching method according to any one of the first aspect or the possible implementations of the first aspect.

According to a twelfth aspect, an embodiment of this application provides a computer program product including instructions. When the instructions are run on a computer, the computer is enabled to perform the network element switching method according to any one of the second aspect or the possible implementations of the second aspect.

According to a thirteenth aspect, an embodiment of this application provides a computer program product including instructions. When the instructions are run on a computer, the computer is enabled to perform the network element switching method according to any one of the third aspect or the possible implementations of the third aspect.

According to a fourteenth aspect, an embodiment of this application provides a communication apparatus, configured to implement the methods according to the possible implementations of any one of the first aspect to the fourth aspect. The communication apparatus may be the foregoing first mobility management network element, an apparatus including the foregoing mobility management network element, or a component (for example, a chip) used in the mobility management network element. Alternatively, the communication apparatus may be the foregoing first LMF network element, an apparatus including the foregoing first LMF network element, or the communication apparatus may be a component (for example, a chip) used in the first LMF network element. The communication apparatus may be the foregoing session management network element, an apparatus including the foregoing session management network element, or a component (for example, a chip) used in the session management network element. Alternatively, the communication apparatus may be the foregoing terminal, an apparatus including the foregoing terminal, or a component (for example, a chip) used in the terminal. The communication apparatus includes a corresponding module or unit for implementing the foregoing method. The module or unit may be implemented by hardware or software, or by executing corresponding software by hardware. The hardware or the software includes one or more modules or units corresponding to the foregoing functions.

According to a fifteenth aspect, an embodiment of this application provides a communication apparatus. The communication apparatus includes at least one processor and a communication interface. When the communication apparatus runs, the processor executes computer-executable instructions or a program stored in the communication apparatus, to enable the communication apparatus to perform the method according to any possible design of any one of the first aspect, the second aspect, the third aspect, or the fourth aspect. For example, the communication apparatus may be a first mobility management network element, or may be a component used in the first mobility management network element. For example, the communication apparatus may be a first LMF network element, or a component used in the first LMF network element. For example, the communication apparatus is a terminal, or a component used in the terminal. For example, the communication apparatus may be a session management network element, or a component used in the session management network element.

It should be understood that the communication apparatus described in the fifteenth aspect may further include a bus and a memory, and the memory is configured to store code and data. Optionally, the at least one processor, the communication interface, and the memory are coupled to one another.

According to a sixteenth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method according to any one of the first aspect or the possible designs of the first aspect. For example, the communication apparatus may be a first mobility management network element, or a chip used in the first mobility management network element.

According to a seventeenth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in any one of the second aspect or the possible designs of the second aspect. For example, the communication apparatus may be a first LMF network element, or a chip used in the first LMF network element.

According to an eighteenth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method according to any one of the third aspect or the possible designs of the third aspect. For example, the communication apparatus may be a terminal, or a chip used in the terminal.

According to a nineteenth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method according to any one of the fourth aspect or the possible designs of the fourth aspect. For example, the communication apparatus may be a session management network element, or a chip used in the session management network element.

It should be understood that the memory described in any one of the sixteenth aspect to the nineteenth aspect may alternatively be replaced with a storage medium. This is not limited in embodiments of this application. In a possible implementation, the memory described in any one of the sixteenth aspect to the nineteenth aspect may be a memory inside the communication apparatus. Certainly, the memory may alternatively be located outside the communication apparatus. However, the at least one processor may still execute the computer-executable instructions or the program stored in the memory.

According to a twentieth aspect, an embodiment of this application provides a communication apparatus. The communication apparatus includes one or more modules, configured to implement the method according to any one of the first aspect, the second aspect, the third aspect, and the fourth aspect. The one or more modules may correspond to steps in the method according to any one of the first aspect, the second aspect, the third aspect, and the fourth aspect.

According to a twenty-first aspect, an embodiment of this application provides a chip. The chip includes a processor and a communication interface, the communication interface is coupled to the processor, and the processor is configured to run a computer program or instructions, to implement network element switching described in the first aspect or the possible implementations of the first aspect. The communication interface is configured to communicate with a module other than the chip.

According to a twenty-second aspect, an embodiment of this application provides a chip. The chip includes a processor and a communication interface, the communication interface is coupled to the processor, and the processor is configured to run a computer program or instructions, to implement the network element switching method according to any one of the second aspect or the possible implementations of the second aspect. The communication interface is configured to communicate with a module other than the chip.

According to a twenty-third aspect, an embodiment of this application provides a chip. The chip includes a processor and a communication interface, the communication interface is coupled to the processor, and the processor is configured to run a computer program or instructions, to implement the network element switching method according to any one of the third aspect or the possible implementations of the third aspect. The communication interface is configured to communicate with a module other than the chip.

Specifically, the chip provided in this embodiment of this application further includes a memory, configured to store the computer program or the instructions.

According to a twenty-fourth aspect, an embodiment of this application provides a communication system. The communication system includes a first mobility management network element and a first LMF network element. The first LMF network element is configured to perform the method according to any one of the second aspect or the possible implementations of the second aspect. The first mobility management network element is configured to perform the method according to any one of the first aspect or the possible implementations of the first aspect.

Any apparatus, computer storage medium, computer program product, chip, or communication system provided above is configured to perform the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a diagram of a method for establishing a user plane secure connection according to an embodiment of this application;
FIG. 2 is a diagram of an architecture of a communication system according to an embodiment of this application;
FIG. 3 is a diagram of an architecture of a 5G system according to an embodiment of this application;
FIG. 4 to FIG. 12A and FIG. 12B each are a schematic flowchart of a network element switching method according to an embodiment of this application;
FIG. 13 is a diagram of a structure of a communication apparatus according to an embodiment of this application;
FIG. 14 is a diagram of a structure of a communication device according to an embodiment of this application; and
FIG. 15 is a diagram of a structure of a chip according to an embodiment of this application.

### DESCRIPTION OF EMBODIMENTS

In this application, "at least one" means one or more, and "a plurality of" means two or more. In addition, "and/or" describes an association between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Technical solutions in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a public land mobile network (public land mobile network, PLMN) system, a device-to-device (device-to-device, D2D) network system or a machine-to-machine (machine-to-machine, M2M) network system, and a future 5G communication system.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

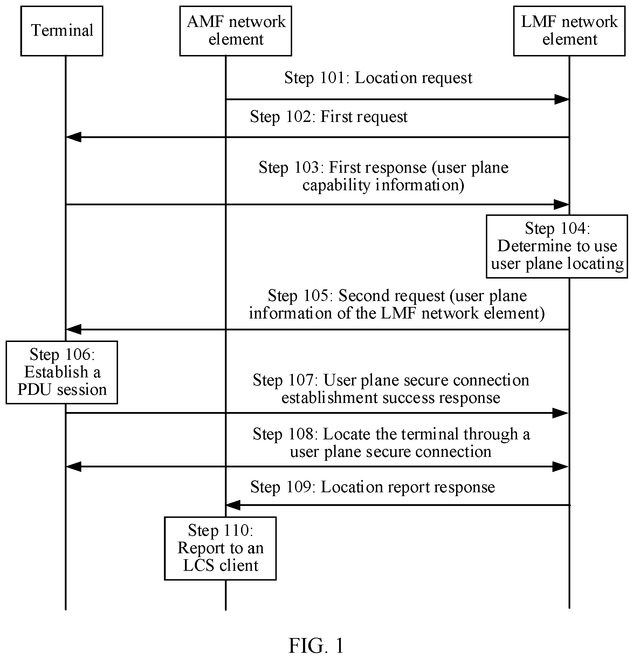

FIG. 1 is a diagram of a method for establishing a user plane secure connection. The method includes the following steps.

Step 101: A location service (location service, LCS) client (client) sends a location request for a target terminal to an LMF network element by using a gateway mobile location center (gateway mobile location center, GMLC)/AMF network element, and accordingly, the LMF network element receives the location request from the LCS client.

If the LMF network element does not have user plane capability information of the terminal, after receiving the location request, the LMF network element queries, by using a control plane NAS message, the terminal for a locating capability supported by the terminal, for example, whether user plane locating is supported.

Step 102: The LMF network element sends a first request to the terminal, and accordingly, the terminal receives the first request from the LMF network element. The first request is used to request user plane locating capability information of the terminal.

Step 103: The terminal sends a first response to the LMF network element, and accordingly, the LMF network element receives the first response from the terminal. The first response includes the user plane locating capability information of the terminal.

Step 104: When the LMF network element discovers that the terminal supports the user plane locating, and with reference to information such as control plane load, the LMF network element determines to use the user plane locating.

Step 105: The LMF network element sends a second request to the terminal. The second request includes user plane information (a DNN, S-NSSAI, an IP address, or an FQDN) of the LMF network element. Accordingly, the terminal receives the second request from the LMF network element.

Step 106: If the terminal currently has no established PDU session, the terminal establishes a PDU session based on the user plane information of the LMF network element.

Step 107: After establishing the PDU session, the terminal sends a user plane secure connection establishment success response (which may also be referred to as an acknowledgment message) to the LMF network element, to indicate that the PDU session is successfully established.

If the establishment fails, the terminal returns an establishment failure message, so that the LMF network element determines that the session fails to be established.

Then, the terminal and the LMF network element establish a user plane secure connection (establishing secure connection) based on the foregoing PDU session.

Step 108: The terminal and the LMF network element exchange an LPP message through the established user plane secure connection to perform user plane-based locating.

For example, the LMF network element may send a downlink (downlink, DL) LPP transmission message to the terminal. Alternatively, the terminal may send an uplink (uplink, UL) LPP transmission message to the LMF network element. It may be understood that the terminal may perform positioning measurement (positioning measurement) or estimation (calculate) after receiving the downlink LPP transmission message.

Step 109: The LMF network element sends a location report response to the AMF network element based on a control plane procedure. The location report response includes location estimation of the terminal.

Step 110: The AMF network element returns/reports the location estimation of the terminal to the LCS client.

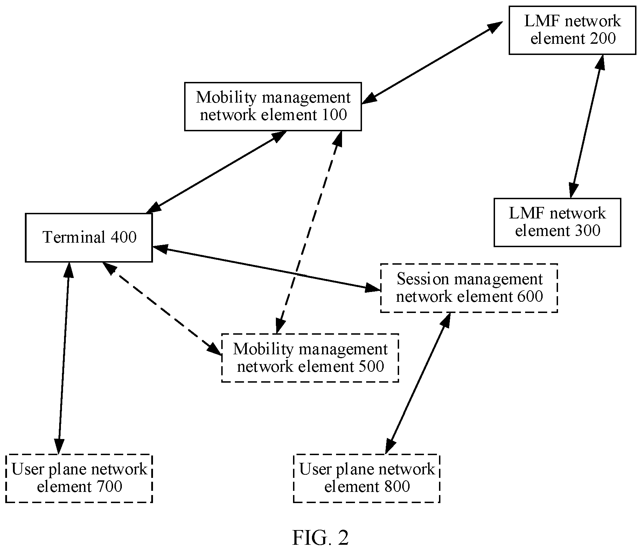

FIG. 2 is a diagram of an architecture of a communication system according to an embodiment of this application. The system includes a mobility management network element 100, one or more LMF network elements (for example, an LMF network element 200 and an LMF network element 300), and a terminal 400. The mobility management network element 100 is a network element in a core network accessed by the terminal 400, and a user plane secure connection may be established between the terminal 400 and any LMF network element. The LMF network element may locate a terminal based on the user plane secure connection.

For a process of establishing the user plane secure connection between the terminal and the LMF network element and a process of performing locating based on the user plane secure connection, refer to related descriptions in FIG. 1. Details are not described herein again.

Optionally, because the terminal 400 may be a static terminal or a mobile terminal, a mobility management network element accessed by the terminal 400 may change. For example, the terminal moves from a tracking area (tracking area, TA) 1 to a TA 2. The TA 1 corresponds to the mobility management network element 100, TA2 corresponds to a mobility management network element 500, and a mobility management network element accessed by the terminal is updated from the mobility management network element 100 to the mobility management network element 500. Therefore, optionally, as shown in FIG. 2, the foregoing communication system may further include a mobility management network element 500. It may be understood that the mobility management network element 100 is a mobility management network element that provides a service for the terminal 400 before the terminal 400 accesses the mobility management network element 500.

It may be understood that each LMF network element corresponds to one service range, and service ranges of different LMF network elements may be different or the same. As the terminal 400 moves, for example, the terminal 400 moves out of a service range of the LMF network element 200, in this case, a user plane secure connection between the terminal 400 and the LMF network element 200 may be interrupted, or a locating delay may be greater than or equal to a preset delay. Therefore, to maintain the user plane secure connection between the terminal 400 and the LMF network element 200, to subsequently locate another service of the terminal through the established user plane secure connection, when the terminal 400 is located outside the service range of the LMF network element 200, the mobility management network element 100 may reselect one LMF network element for the terminal 400, for example, the LMF network element 300. Alternatively, when load of the LMF network element 200 is greater than a first load threshold or the locating delay on the user plane secure connection between the LMF network element 200 and the terminal 400 increases, the LMF network element 200 reselects an LMF network element for the terminal 400, for example, the LMF network element 300. Then, when a locating service requirement exists, the LMF network element 300 may perform user plane locating on the terminal 400 through a user plane secure connection between the LMF network element 300 and the terminal 400.

In a possible implementation of this application, optionally, as shown in FIG. 2, the communication system may further include a session management network element 600 and a user plane network element 700.

The user plane network element 700 is selected by the session management network element 600 for the terminal 400, and a PDU session 1 may be established between the terminal 400 and the user plane network element 700. The terminal 400 may establish a user plane secure connection with the LMF network element 200 based on the PDU session 1. It may be understood that when a user plane network element of the terminal is the user plane network element 700, the LMF network element 200 is reachable to the user plane network element 700. In other words, the terminal 400 may access the LMF network element 200 by using the user plane network element 700.

However, a location of the terminal 400 may keep changing. For example, when the location of the terminal 400 changes, the user plane network element 700 may not be suitable for providing a service for the terminal 400. In this case, a user plane network element of the terminal 400 also needs to be updated, to ensure that a PDU session of the terminal is not interrupted.

Optionally, as shown in FIG. 2, the communication system may further include a user plane network element 800. The user plane network element 800 is a user plane network element reselected by the session management network element 600 for the terminal 400 after the terminal moves. The terminal 400 may establish a PDU session 2 with the user plane network element 800.

It may be understood that when the user plane network element of the terminal 400 is switched from the user plane network element 700 to the user plane network element 800, there may be a case in which the LMF network element 200 is reachable to the user plane network element 800, or there may be a case in which the LMF network element 200 is unreachable to the user plane network element 800. Therefore, when selecting the LMF network element 200 for the terminal 400, the mobility management network element 100 may select, as much as possible, an LMF network element that is reachable to the user plane network element 800, or reselect, for the terminal 400, an LMF network element 300 that is reachable to the user plane network element 800.

Certainly, the following case may alternatively exist: The location of the terminal 400 is updated, and the location of the terminal 400 is outside the service range of the LMF network element 200. In this case, the LMF network element 200 cannot continue to provide a service for the terminal 400. Therefore, to reduce a delay of a subsequent locating service of the terminal, after selecting the LMF network element 300 for the terminal 400, the mobility management network element 100 may send information about the LMF network element 300 to the session management network element 600. In this way, when determining that the LMF network element 300 is unreachable to the user plane network element 700, the session management network element 600 reselects the user plane network element 800 for the terminal 400, and then the terminal 400 may establish a PDU session with the user plane network element 800.

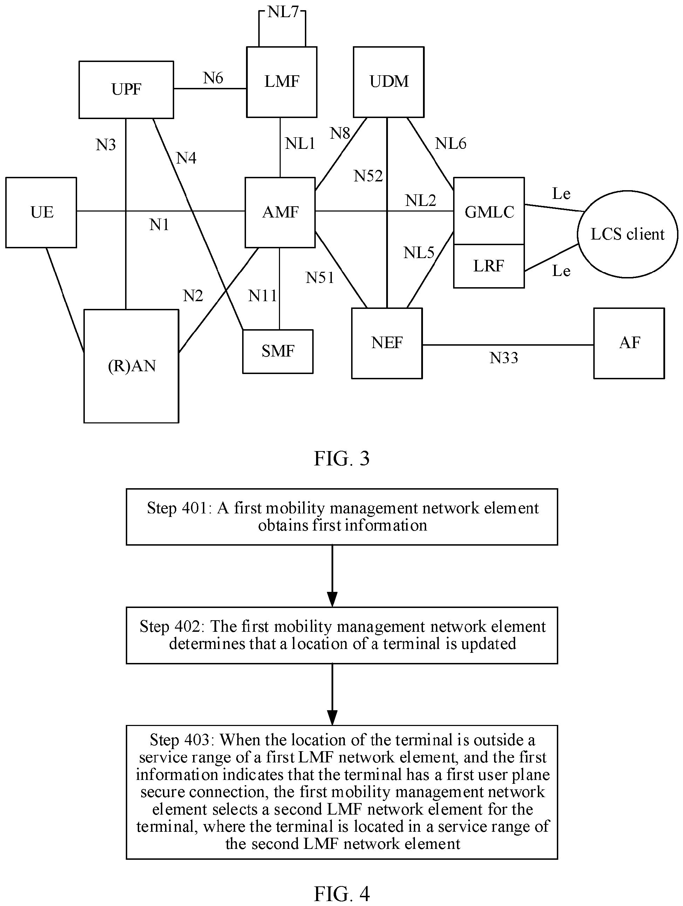

The following uses an example in which the communication system shown in FIG. 2 is applicable to a 5G network. As shown in FIG. 3, a network element or an entity corresponding to the foregoing mobility management network element 100 or the mobility management network element 500 may be an access and mobility management function (access and mobility management function, AMF) network element shown in FIG. 3. A network element or an entity corresponding to the session management network element 600 is a session management function (session management function, SMF) network element. A network element or an entity corresponding to the user plane network element 700 and the user plane network element 800 may be a user plane function (user plane function, UPF) network element shown in FIG. 3. A network element or an entity corresponding to the LMF network element 300 or the LMF network element 200 may be a location management function (location management function, LMF) network element.

Optionally, as shown in FIG. 3, the 5GS may further include a RAN, a unified data management (unified data management, UDM) network element, a gateway mobile location center (gateway mobile location center, GMLC) network element, a network exposure function (network exposure function, NEF) network element, a location service request client (LCS client), an application function (application function, AF) network element, and some network elements that are not shown, for example, a network function repository function (network function repository function, NRF) network element.

Embodiments of this application specifically relate to a terminal, the RAN, the AMF network element, the SMF network element, the UDM network element, the LMF network element, the AF network element, and the LCS client. The AMF network element is responsible for an access and mobility management function, and may receive non-access stratum (non-access stratum, NAS) signaling of the terminal, including mobility management signaling, session management signaling, and related signaling (for example, node level N2 signaling exchanged with the AMF network element) of an access network device, to complete a user registration procedure, SM signaling forwarding, and mobility management. The LMF network element is responsible for a location-related information service of the terminal, including assistance information provided for the terminal to perform location measurement, or processing location measurement information reported by the terminal or a base station, and calculating final coordinates, a location moving speed, and the like. The UPF network element is an anchor of a session of the terminal. The SMF network element is responsible for managing the session of the terminal. The UDM network element stores subscription information (which may also be referred to as subscription data) of the terminal. The GMLC network element is responsible for interaction between an internal 5GC and an external LCS client/AF network element, for example, receiving location information provision requests from the LCS client and the AF network element, sending the requests to the AMF network element, and providing location information to the LCS client network element and the AF network element after the AMF network element returns the location information.

The terminal may access the 5GC by using the RAN, and may communicate with the AMF network element through an N1 interface. The RAN communicates with the AMF network element through an N2 interface. The AMF network element communicates with the SMF network element through an N11 interface, the AMF network element communicates with the UDM network element through an N8 interface, and the AMF network element communicates with the LMF network element through an NL1 interface. The AMF network element communicates with the GMLC network element through an NL2 interface, and the NEF network element communicates with the AMF network element through an N51 interface. Because the terminal needs to exchange an LPP message with the LMF network element through a user plane, the LMF needs to interwork with the UPF through an N6 interface. The RAN communicates with the UPF network element through an N3 interface. The SMF network element communicates with the UPF network element through an N4 interface. The LMF network element communicates with the LMF network element through an NL7 interface.

Functions of functional entities in a core network are as follows.

The UPF network element is configured to perform user data packet forwarding according to a routing rule of the SMF network element, for example, send uplink data to a data network (data network, DN) or another UPF network element, and forward downlink data to another UPF network element or the RAN.

An AUSF network element is configured to perform security authentication on the terminal.

The AMF network element is configured to implement access management and mobility management of the terminal. The AMF network element is responsible for status maintenance of the terminal, reachability management of the terminal, non-mobility management (mobility management, MM), non-access stratum (non-access stratum, NAS) message forwarding, and session management (session management, SM) N2 message forwarding.

The SMF network element is responsible for managing a session of the terminal, and allocating or releasing a resource for the session of the terminal, where the resource includes a session quality of service (quality of service, QoS) parameter, a session path, a forwarding rule, and the like.

An NSSF network element is configured to select a network slice for the terminal.

The NEF network element exposes a network function to a third party in a northbound application programming interface (application programming interface, API) manner.

The NRF network element stores and selects network functional entity information for another network element.

The UDM network element is configured to store subscription information of the terminal or manage a context of the terminal.

A PCF network element manages a user policy.

The AF network element is configured to manage an application.

The terminal (terminal) may include various handheld devices, vehicle-mounted devices, wearable devices, and computing devices that have a wireless communication function, or other processing devices connected to a wireless modem. The terminal may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G residential gateway (residential gateway, RG). For ease of description, in this application, the devices mentioned above are collectively referred to as terminals.

It should be understood that the terminal in embodiments of this application may alternatively be a terminal device in an internet of things or a terminal in a plurality of vertical industry application fields such as a port, an intelligent factory, railway transportation, logistics, an uncrewed aerial vehicle, and a driverless car, for example, a mobile robot (mobile robot), an automated guided vehicle (automated guided vehicle, AGV), a driverless car, a control device and a sensor on a train, or a control device and a sensor (sensor) deployed in a factory.

For example, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not merely a hardware device, but is used to implement a powerful function through software support, data exchange, and cloud interaction. In broad sense, wearable intelligent devices include full-featured and large-sized devices that can implement complete or partial functions without depending on smartphones, such as smart watches or smart glasses, and devices that focus only on a type of application function and need to work with other devices such as smartphones, such as various smart bands or smart jewelry for monitoring physical symptoms. The terminal may alternatively be a sensor device used in a factory.

In embodiments of this application, a specific structure of an execution body of the network element switching method is not particularly limited in embodiments of this application, provided that communication can be performed according to the network element switching method in embodiments of this application by running a program that records code of the network element switching method in embodiments of this application. For example, the network element switching method provided in embodiments of this application may be performed by a functional module that is in a first mobility management network element and that can invoke and execute a program, or may be a communication apparatus, for example, a chip, used in the first mobility management network element. The network element switching method provided in embodiments of this application may be performed by a functional module that is in the first mobility management network element and that can invoke and execute a program, or may be a communication apparatus, for example, a chip, used in the first mobility management network element. This is not limited in this application. The network element switching method provided in embodiments of this application may be performed by a functional module that is in the first LMF network element and that can invoke and execute a program, or may be a communication apparatus, for example, a chip, used in the first LMF network element. This is not limited in this application. The following embodiments are described by using an example in which the network element switching method is performed by the first LMF network element and the first mobility management network element.

As shown in FIG. 4, an embodiment of this application provides a network element switching method. The method includes the following steps.

Step 401: A first mobility management network element obtains first information. The first information indicates that a first user plane secure connection exists between a terminal and a first LMF network element. The first user plane secure connection is used to perform transmission of a message, for example, an LPP message, related to user plane locating between the first LMF network element and the terminal.

Alternatively, the first information indicates a status of the first user plane secure connection between the terminal and the first LMF network element. It may be understood that if the status of the first user plane secure connection is a maintained state, it may also indicate that the first user plane secure connection exists between the terminal and the first LMF network element.

In an example, the state of the first user plane secure connection may be a released state, or may be the maintained state. When the status of the first user plane secure connection is the maintained state, it indicates that the first user plane secure connection needs to be used to subsequently locate a subsequent locating service of the terminal.

In an example, with reference to the system shown in FIG. 2, the first mobility management network element may be the foregoing mobility management network element 100 or the mobility management network element 500. The first LMF network element may be the LMF network element 200. The terminal may be the foregoing terminal 400.

Step 402: The first mobility management network element determines that a location of the terminal is updated.

In a possible implementation of this application, after the terminal moves, the terminal sends a mobility registration update request to the first mobility management network element, so that the first mobility management network element may determine, based on the mobility registration update request, that the location of the terminal is updated. Certainly, the first mobility management network element may alternatively determine, in another manner, that the location of the terminal is updated. This is not limited in this embodiment of this application.

In another possible implementation of this application, after step 401, the first mobility management network element may periodically obtain location information of the terminal from the terminal. This is not limited in this embodiment of this application.

Step 403: When a location of the terminal is outside a service range of the first LMF network element, and the first information indicates that the terminal has the first user plane secure connection, the first mobility management network element selects a second LMF network element for the terminal, where the terminal is located in a service range of the second LMF network element.

In an example, with reference to FIG. 2, the second LMF network element may be the foregoing LMF network element 300.

It may be understood that information about service ranges of one or more LMF network elements (including the first LMF network element and the second LMF network element) is configured in the first mobility management network element. Alternatively, when the first mobility management network element determines that the location of the terminal is updated, the first mobility management network element may obtain the service range of the first LMF network element from the first LMF network element or another network element that stores the service range of the first LMF network element.

It may be understood that, assuming that the first information indicates that the first user plane secure connection between the terminal and the first LMF network element does not exist, when the first mobility management network element subsequently determines that the location of the terminal is updated, and the location of the terminal is outside the service range of the first LMF network element, the second LMF network element may not be selected for the terminal.

It may be understood that when the first information indicates that the first user plane secure connection exists between the terminal and the first LMF network element, and the updated location of the terminal is located in the service range of the first LMF network element, the first mobility management network element may select the second LMF network element for the terminal, or may not select the second LMF network element for the terminal. For example, when the updated location of the terminal is located in the service range of the first LMF network element, the first mobility management network element determines that load of the first LMF network element is greater than or equal to a first load threshold, or the first mobility management network element determines that a specific condition is met, the first mobility management network element may select the second LMF network element for the terminal. For example, the condition includes one or more of the following: A distance between the terminal and the second LMF network element is less than a distance between the terminal and the first LMF network element, load of the second LMF network element is lower than the load of the first LMF network element, and a delay between the terminal and the first LMF network element increases.

An embodiment of this application provides a network element switching method. In the method, the first mobility management network element obtains the first information, so that the first mobility management network element learns that the first user plane secure connection exists between the terminal and the first LMF network element. In this way, after the location of the terminal is updated, if the location of the terminal is outside the service range of the first LMF network element, and the first information indicates that the first user plane secure connection exists, the first LMF network element indicates, to the first mobility management network element, that the first user plane secure connection exists, and it indicates that the terminal further needs to be located through the first user plane secure connection subsequently. Therefore, the first mobility management network element may switch to an LMF network element (for example, the second LMF network element) for the terminal in a timely manner, so that before a subsequent locating service arrives, the terminal and the second LMF network element already have a user plane secure connection. In this way, in comparison with the conventional technology in which establishment of the user plane secure connection is triggered after the locating service arrives, this can reduce a locating delay.

It should be noted that the foregoing step 401 and step 402 are not in a sequence. To be specific, the first mobility management network element may obtain the first information after determining that the location of the terminal is updated, or may obtain the first information before the location of the terminal is updated.

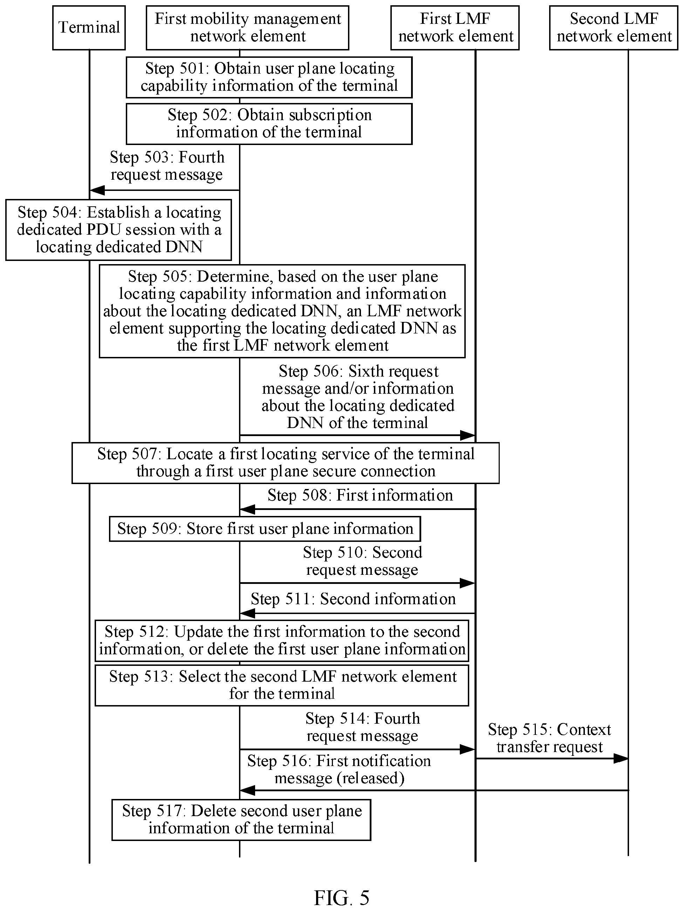

FIG. 5 is another embodiment according to an embodiment of this application. The foregoing step 401 may be implemented by using step 508. To be specific, a first mobility management network element obtains first information from a first LMF network element. Optionally, as shown in FIG. 5, before step 508, the method may further include the following steps.

Step 501: The first mobility management network element obtains user plane locating capability information of a terminal. The user plane locating capability information indicates that the terminal supports user plane locating.

In an example, the first mobility management network element may obtain the user plane locating capability information of the terminal from the terminal. For example, in a process in which the terminal registers with the first mobility management network element, the terminal provides the user plane locating capability information of the terminal for the first mobility management network element.

In an example, in a process in which the terminal requests to register with the first mobility management network element, the terminal may send the user plane locating capability information of the terminal to the first mobility management network element. For example, the user plane locating capability information of the terminal is carried in a registration request.

In another example, the first mobility management network element may obtain the user plane locating capability information of the terminal from a UDM network element.

Step 502: The first mobility management network element obtains subscription information of the terminal from the UDM network element. The subscription information includes a locating dedicated data network name DNN of the terminal.

Step 503: The first mobility management network element sends a fourth request message to the terminal based on the user plane locating capability information of the terminal and the subscription information of the terminal. Accordingly, the terminal receives the fourth request message from the first mobility management network element. The fourth request message is used to trigger establishment of a locating dedicated PDU session between the terminal and the locating dedicated DNN.

In an example, the fourth request message may be a session establishment trigger request. Optionally, the fourth request message may carry fourth indication information. The fourth indication information indicates the terminal to establish the locating dedicated PDU session with the locating dedicated DNN. Optionally, the fourth request message may further carry the locating dedicated DNN, so that the terminal can determine a locating dedicated DNN with which the terminal establishes the locating dedicated PDU session.

Step 504: The terminal establishes the locating dedicated PDU session with the locating dedicated DNN based on the fourth request message.

It may be understood that the locating dedicated PDU session is used to establish a user plane secure connection between the terminal and an LMF network element.

It should be noted that, assuming that before the locating dedicated PDU session is established between the terminal and the locating dedicated DNN, the terminal already has a PDU session 3 with a non-locating dedicated DNN, the terminal may switch an anchor of the PDU session 3 to the locating dedicated DNN, to form the locating dedicated PDU session with the locating dedicated DNN. Certainly, if the terminal has established the locating dedicated PDU session with the locating dedicated DNN before the terminal receives the fourth request message, step 504 may be omitted.

In an optional implementation of this application, after the terminal establishes the locating dedicated PDU session with the locating dedicated DNN, the method provided in this embodiment of this application may further include: The terminal sends a response message to the first mobility management network element. The response message indicates that the terminal has established the locating dedicated PDU session with the locating dedicated DNN, or the locating dedicated PDU session has been successfully established.

That the terminal has established the locating dedicated PDU session before establishing the first user plane secure connection (that is, before initiating a location request) may be implemented by using the foregoing step 501 to step 504. Because the PDU session is established before the location request, in comparison with a case in which a PDU session between the LMF network element and the terminal is established after the location request, in this solution, the terminal may subsequently establish, based on the session, a user plane secure connection dedicated to locating, to reduce a delay of a subsequent locating service.

Certainly, it may be understood that when the terminal does not have a locating dedicated DNN, the terminal may establish a PDU session with a non-locating dedicated DNN. In this case, the foregoing step 503 and the following process in which the first mobility management network element sends the locating dedicated data network name DNN to the first LMF network element may be omitted. Certainly, when the first mobility management network element selects the first LMF network element for the terminal in step 505, whether the first LMF network element can support the locating dedicated DNN does not need to be determined.

In this embodiment of this application, that the LMF network element supports a DNN may be understood as that the LMF network element is planned to belong to the DNN during network planning, so that the terminal can establish a secure connection with the LMF network element based on a PDU session between the terminal and the DNN. Descriptions are uniformly provided herein, and details are not described subsequently again.

In a possible implementation of this application, the first LMF network element is any LMF network element that can provide a service for the terminal. The first LMF network element may support the locating dedicated data network DNN, or may not support the locating dedicated data network DNN. In an example, when the locating dedicated PDU session exists between the terminal and the locating dedicated DNN, the first mobility management network element selects the first LMF network element for the terminal, and preferentially selects the first LMF network element that supports the locating dedicated DNN. Certainly, when selecting the first LMF network element or a second LMF network element for the terminal, the first mobility management network element may further refer to a distance between the LMF network element and the terminal or information such as or load of the LMF network element in addition to whether the LMF network element supports the locating dedicated DNN.

In another possible implementation of this application, when the locating dedicated PDU session exists between the terminal and the locating dedicated DNN, if the first mobility management network element determines to locate the terminal, for example, if the first mobility management network element receives a location provision request from an AF network element/terminal or an LCS client, as shown in FIG. 5, before step 506, the method provided in this embodiment of this application may further include the following step.

Step 505: The first mobility management network element determines, based on the user plane locating capability information and the locating dedicated DNN, an LMF network element supporting the locating dedicated DNN as the first LMF network element.

It may be understood that when no locating dedicated DNN exists in the subscription information of the terminal, the foregoing step 505 may be implemented in the following manner: The first mobility management network element selects, as the first LMF network element based on the user plane locating capability information, an LMF network element that can provide a service for the terminal.

Optionally, when selecting the first LMF network element for the terminal, the first mobility management network element may refer to load or a delay of each LMF network element. For example, an LMF network element whose load is lower than a preset threshold is selected as the first LMF network element. Alternatively, if a delay between the terminal and an LMF network element 1 is greater than a delay between the terminal and an LMF network element 2, the LMF network element 2 may be selected as the first LMF network element.

Optionally, the first mobility management network element stores the user plane locating capability information of the terminal and the locating dedicated DNN.

In a possible implementation of this application, the first mobility management network element stores related information about one or more LMF network elements. The related information may include an identifier of the LMF network element, a service range of the LMF network element, and capability information of the LMF network element. The capability information of the LMF network element is used to reflect whether the LMF network element supports the locating dedicated DNN.

In another possible implementation of this application, the first mobility management network element may send a request to the one or more LMF network elements after step 504, to request the LMF network element to provide the capability information of the LMF network element. Certainly, if capability information of the one or more LMF network elements is stored in another network element, the first mobility management network element may alternatively obtain the capability information of the one or more LMF network elements from the another network element.

In a possible implementation of this application, when the first LMF network element is the LMF network element supporting the locating dedicated DNN, after step 505, as shown in FIG. 5, the method provided in this embodiment of this application may further include the following step.

Step 506: The first mobility management network element sends a sixth request message and/or the locating dedicated DNN of the terminal to the first LMF network element. Accordingly, the first LMF network element receives the sixth request message and/or the locating dedicated DNN of the terminal from the first mobility management network element.

In this embodiment of this application, because the first LMF network element may alternatively reselect an LMF network element for the terminal when a specific condition is met, the first mobility management network element provides the locating dedicated DNN of the terminal for the first LMF network element. In this way, the first LMF network element selects, for the terminal, a second LMF network element that supports the locating dedicated DNN.

In a possible implementation of this application, after step 505, the method provided in this embodiment of this application may further include: The first mobility management network element sends a first request message to the first LMF network element. The first request message is used to request the first LMF network element to locate the terminal.

Optionally, the first request message is used to request the first LMF network element to perform user plane locating on the terminal. Optionally, the first request message carries indication information, and the indication information indicates the first LMF network element to perform user plane locating on the terminal. Optionally, the first request message may further carry an identifier of the terminal. In this way, the first LMF network element may determine, based on the identifier of the terminal, a terminal on which the first LMF network element performs locating.

In the foregoing solution, the first mobility management network element sends the sixth request message and/or the locating dedicated DNN of the terminal to the first LMF network element in a process in which the first mobility management network element requests, by using the first request message, the first LMF network element to perform user plane locating on the terminal. In this way, the first LMF network element determines, based on the sixth request message, that the first LMF network element needs to provide a status of the user plane secure connection between the first LMF network element and the terminal for the first mobility management network element.

Optionally, the first request message includes the sixth request message and/or the locating dedicated data network name DNN of the terminal. In an example, the sixth request message may be a subscription request message, or may be a message other than the subscription request message. The subscription request message is used to request to subscribe to the status of the user plane secure connection between the first LMF network element and the terminal. Optionally, the subscription request message may further carry address information of the first mobility management network element, so that the first LMF network element determines an object for reporting the status of the user plane secure connection.

Optionally, the first request message may further carry the user plane locating capability information of the terminal. In this way, the first LMF network element determines that the terminal supports the user plane locating, and uses a user plane locating method when determining to locate the terminal.

In another possible implementation of this application, the foregoing first mobility management network element sends the sixth request message and/or the locating dedicated data network name DNN of the terminal to the first LMF network element by using a message other than the first request message.

Optionally, after the first mobility management network element determines to locate the terminal, and selects the first LMF network element for the terminal based on the location of the terminal, step 508 may be performed.

Optionally, when the first user plane secure connection is established between the first LMF network element and the terminal, the terminal or the first LMF network element may send a connection establishment success notification to the first mobility management network element. In this way, the first mobility management network element may request (subscribe to) the status of the first user plane secure connection from the first LMF network element based on the connection establishment success notification.

It may be understood that after receiving the first request message, the first LMF network element may establish the first user plane secure connection with the terminal. A specific process of establishing the first user plane secure connection is not described herein again.

In another possible embodiment of this application, as shown in FIG. 5, after the first user plane secure connection is established, the method provided in this embodiment of this application may further include the following steps.

Step 507: The first LMF network element locates a first locating service of the terminal through the first user plane secure connection.

It may be understood that the second LMF network element is configured to establish a second user plane secure connection with the terminal. The second user plane secure connection is used to locate a second locating service of the terminal. The first user plane secure connection is used to locate the first locating service of the terminal. The second locating service and the first locating service may be a same locating service, but time of the first locating service is earlier than time of the second locating service, or the second locating service and the first locating service may be different locating services. Alternatively, for periodic locating, the first locating service and the second locating service may be one locating service. In different trigger periodicities, the first locating service needs to be located. For example, the terminal has a periodic first locating service, and a periodicity of the first locating service is 10 minutes. In this case, the first locating service of the terminal is located in a T1 time period through the first user plane secure connection. After 10 minutes, the first locating service of the terminal needs to be located again in a T2 time period through the first user plane secure connection. If the location of the terminal moves out of the service range of the first LMF network element between the time period T1 and the time period T2, the first mobility management network element may trigger selection of the second LMF network element for the terminal, then the terminal may establish the second user plane secure connection with the second LMF network element, and then the second LMF network element locates the first locating service of the terminal in the T2 time period by using the second LMF network element.

Step 508: The first LMF network element sends the first information to the first mobility management network element accessed by the terminal. Accordingly, the foregoing step 401 may be implemented in the following manner: The first mobility management network element receives the first information from the first LMF network element. The first information is used to determine the status of the first user plane secure connection. The first user plane secure connection is used to perform transmission of a message related to user plane locating between the first LMF network element and the terminal.

In an optional embodiment of this application, as shown in FIG. 5, after step 508, the method provided in this embodiment of this application may further include the following step.

Step 509: The first mobility management network element stores first user plane information. The first user plane information includes the first information and an identifier of the first LMF network element.

In an example, the first information is at least one of first indication information and a user plane locating method indication. The user plane locating method indication indicates to locate the terminal by using the user plane locating method. The first indication information indicates the status of the first user plane secure connection.

In an optional embodiment of this application, as shown in FIG. 5, after step 508, the method provided in this embodiment of this application may further include the following steps.

Step 510: The first mobility management network element sends a second request message to the first LMF network element. Accordingly, the first LMF network element receives the second request message from the first mobility management network element. The second request message is used to request the status of the first user plane secure connection between the terminal and the first LMF network element.

Optionally, the second request message includes second indication information, and the second indication information is used to request the status of the first user plane secure connection between the terminal and the first LMF network element.

Optionally, the second request message may be the subscription request message. Certainly, the second request message may alternatively be a message other than the subscription request message. This is not limited in this embodiment of this application.

Optionally, if the first mobility management network element has sent the sixth request message to the first LMF network element in step 506, step 510 may be omitted. Certainly, both step 510 and step 506 may exist.

Step 511: The first LMF network element sends second information to the first mobility management network element based on the second request message. Accordingly, the first mobility management network element receives the second information from the first LMF network element. The second information indicates that the first user plane secure connection does not exist.

Optionally, if the first LMF network element determines that the first user plane secure connection is released, step 511 is performed. If the first LMF network element determines that the first user plane secure connection is not released, the first LMF network element sends the first information to the first LMF network element.

Step 512: The first mobility management network element updates the first information to the second information, or deletes the first user plane information.

For example, if the first information indicates that the first user plane secure connection exists, and the second information indicates that the first user plane secure connection does not exist, the first mobility management network element may replace the first information with the second information. In this case, even if the terminal is outside the service range of the first LMF network element, the first mobility management network element may alternatively not perform a step of reselecting an LMF network element for the terminal. For example, if the first information is still sent in step 511, and the terminal is outside the service range of the first LMF network element, the first mobility management network element performs the step of reselecting an LMF network element for the terminal.

It should be noted that, if the first mobility management network element receives the first information in step 511, the following step 513 is performed. If the second information is received in step 511, step 512 is performed.

Step 513 is the same as step 403, and details are not described herein again.

In a possible embodiment of this application, after the first mobility management network element selects the second LMF network element for the terminal, as shown in FIG. 5, the method provided in this embodiment of this application further includes the following steps.

Step 514: The first mobility management network element sends the fourth request message to the first LMF network element. Accordingly, the first LMF network element receives the fourth request message from the first mobility management network element.

The fourth request message is used to request to transfer the first user plane secure connection with the terminal to the second LMF network element. The fourth request message includes information about the second LMF network element.

Step 515: The first LMF network element sends a context transfer request to the second LMF network element based on the fourth request message, and accordingly, the second LMF network element receives the context transfer request from the first LMF network element. The context transfer request includes a context of the first user plane secure connection and subscription request information.

Optionally, after context transfer between the first LMF network element and the second LMF network element is completed, the first LMF network element may send a feedback message to the first mobility management network element, to indicate that the first user plane secure connection has been transferred to the second LMF network element. In this way, the first mobility management network element indicates the second LMF network element to establish the second user plane secure connection with the terminal.

Optionally, after the second user plane secure connection is established, if a to-be-located service exists, the first mobility management network element may send a location request to the second LMF network element, to request the second LMF network element to locate the terminal. Then, the second LMF network element may locate the terminal based on the second user plane secure connection. Because the second user plane secure connection is established before the first mobility management network element sends the location request to the second LMF network element, compared with a case in which the second user plane secure connection is established between the second LMF network element and the terminal after the location request is sent, this can reduce a locating delay.

After the first user plane secure connection of the terminal is transferred to the second LMF network element, the second user plane secure connection may be established between the second LMF network element and the terminal. The second LMF network element may locate the terminal based on the location request from the first mobility management network element through the second user plane secure connection. After locating, the second LMF network element or the terminal may release the second user plane secure connection, or may choose to maintain the second user plane secure connection.

Optionally, when the second LMF network element or the terminal maintains the second user plane secure connection, the second LMF network element may send third information to the first mobility management network element, to indicate that the second user plane secure connection exists between the terminal and the second LMF network element.

Optionally, when the second LMF network element or the terminal releases the second user plane secure connection, to facilitate the first mobility management network element to determine that the second user plane secure connection has been released, optionally, in a possible embodiment of this application, as shown in FIG. 5, after step 515, the method provided in this embodiment of this application may further include the following steps.

Step 516: The second LMF network element sends a first notification message to the first mobility management network element. Accordingly, the first mobility management network element receives the first notification message from the second LMF network element. The first notification message notifies that the status of the second user plane secure connection between the second LMF network element and the terminal is a released state.

Optionally, the first notification message may carry indication information indicating that the status of the second user plane secure connection is the released state.

Step 517: The first mobility management network element deletes second user plane information of the terminal. The second user plane information includes the third information and an identifier of the second LMF network element. The third information indicates that the second user plane secure connection exists between the terminal and the second LMF network element.

It may be understood that the third information may be sent to the first mobility management network element based on a request of the first mobility management after the second LMF network element establishes the second user plane secure connection with the terminal, or may be proactively sent by the second LMF network element to the first mobility management. This is not limited in this embodiment of this application.

It may be understood that when the terminal establishes the second user plane secure connection with the second LMF network element, the first mobility management network element may store the second user plane information. For example, the second user plane information includes the third information and the identifier of the second LMF network element. Therefore, when the first mobility management network element receives the first notification message, to reduce occupation of a storage resource of the first mobility management network element, the first mobility management network element may perform the foregoing step 517. Certainly, when the first mobility management network element receives the first notification message, a process of marking the status of the second user plane secure connection as the released state may alternatively be performed. This is not limited in this embodiment of this application.

In a possible implementation of this application, after the first LMF network element locates the first locating service of the terminal through the first user plane secure connection, it is assumed that the first LMF network element determines that no subsequent locating service (for example, the second locating service, where the second locating service refers to a service whose time is later than that of the first locating service, or the second locating service and the first locating service are the same service, but need to be located in different periodicities) exists. In this case, the first LMF network element may release the first user plane secure connection, or the terminal may release the first user plane secure connection.

Certainly, when the first user plane secure connection is released, the first LMF network element sends a third notification message to the first mobility management network element. The third notification message indicates that the first user plane secure connection has been released. In this way, the first mobility management network element determines that after the location of the terminal is updated, and when the updated location of the terminal is outside the service range of the first LMF network element, an LMF network element does not need to be reselected for the terminal. Certainly, in this case, the first LMF network element may not need to send, to the first mobility management network element, information indicating that the first user plane secure connection does not exist or is released.

Optionally, in a possible implementation of this application, to reduce a locating delay of a subsequent locating service, when the first LMF network element determines that the subsequent locating service exists, the first information sent by the first LMF network element to the terminal indicates that the first user plane secure connection exists between the terminal and the first LMF network element.

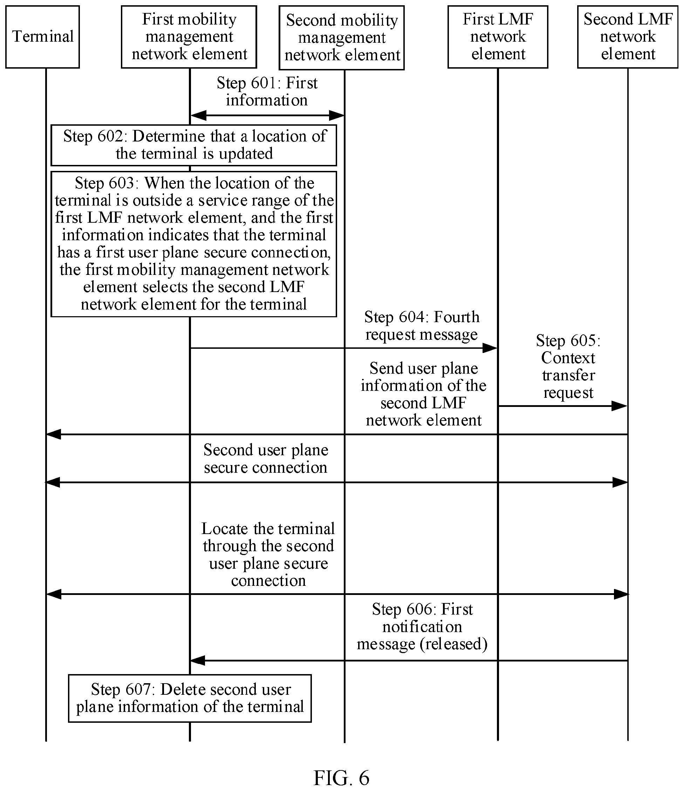

FIG. 6 is another embodiment according to this application. As shown in FIG. 6, step 401 provided in this embodiment of this application may be implemented by using step 601.

Step 601: A first mobility management network element obtains first information from a second mobility management network element.

For example, the first mobility management network element obtains a context of a terminal from the second mobility management network element. The context of the terminal includes the first information, and the second mobility management network element is a network element that provides a service for the terminal before the terminal accesses the first mobility management network element.

In an example, the first mobility management network element is the mobility management network element 500 shown in FIG. 2. The second mobility management network element is the mobility management network element 100 shown in FIG. 2.

In an example, the foregoing step 601 may be implemented in the following manner: The first mobility management network element sends a context transmission request to the second mobility management network element. The first mobility management network element receives a context transmission response from the second mobility management network element. The context transmission response includes the context of the terminal. Optionally, the context of the terminal may further include an identifier of a first LMF network element and the first information. It should be noted that before the terminal is switched to the first mobility management network element, the terminal has established a first user plane secure connection with the first LMF network element.

Step 602 and step 603 are the same as step 402 and step 403. Details are not described herein again.

In a possible implementation, in the embodiment shown in FIG. 6, after step 603, the method provided in this embodiment of this application may further include a step of establishing a second user plane secure connection between a second LMF network element and the terminal, and step 604 to step 607 are the same as step 514 to step 517. Details are not described herein again.

Due to movement of the terminal, the first mobility management network element reselects the second LMF network element for the terminal. Although the second LMF network element may provide a service for the terminal, the second LMF network element may not be reachable to a first user plane network element. In other words, the terminal cannot access the second LMF network element by using the first user plane network element. The first user plane network element corresponds to the first LMF network element. In other words, the terminal may access the first LMF by using the first user plane network element. Therefore, after selecting the second LMF network element for the terminal, the first mobility management network element may further trigger a session management network element to reselect a UPF network element (for example, a second UPF network element) for the terminal, so that the terminal can access the second LMF network element by using the second UPF network element.

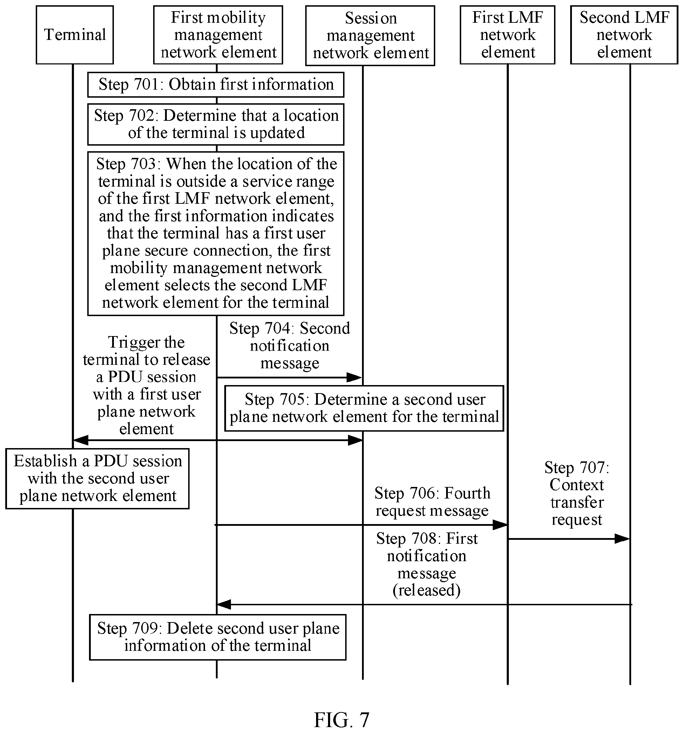

Therefore, FIG. 7 is still another embodiment of this application. As shown in FIG. 7, this embodiment includes step 701 to step 703, where step 701 to step 703 may correspondingly refer to step 401 to step 403. Details are not described herein again.

Optionally, in a possible embodiment of this application, as shown in FIG. 7, after step 703, the method provided in this embodiment of this application may further include the following steps.

Step 704: A first mobility management network element sends a second notification message to a session management network element accessed by a terminal, and accordingly, the session management network element receives the second notification message from the first mobility management network element.

The second notification message includes information related to a second LMF network element, and the second notification message is used to trigger the session management network element to determine whether the second LMF network element is reachable to a first user plane network element of the terminal. The information related to the second LMF network element includes an identifier of the second LMF network element and/or a DNAI associated with a UPF network element corresponding to the second LMF network element. The first user plane network element corresponds to a first LMF network element.

The first user plane network element is a user plane network element accessed by the terminal. That the first user plane network element corresponds to the first LMF network element may mean that the terminal can access the first LMF network element by using the first user plane network element.

Optionally, the second notification message includes second indication information, and the second indication information indicates the session management network element to determine whether the second LMF network element is reachable to the first user plane network element of the terminal.

Step 705: If the session management network element determines, based on the second notification message, that the first user plane network element is unreachable to the second LMF network element, the session management network element initiates UPF network element reselection, to determine a second user plane network element for the terminal.

For example, the session management network element may select, based on the information about the second LMF network element, a UPF network element connected to the second LMF network element as the second user plane network element.

Optionally, after step 705, the method may further include: The session management network element triggers the terminal to release a PDU session established between the terminal and the first user plane network element, and uses the second user plane network element as a new anchor to trigger establishment of a PDU session between the terminal and the second user plane network element.

Optionally, if the session management network element determines, based on the second notification message, that the first user plane network element is reachable to the second LMF network element, the session management network element may not need to initiate the UPF network element reselection.

Optionally, regardless of whether the first user plane network element is reachable to the second LMF network element, the session management network element may send a determining result to the first mobility management network element, for example, indicating that the first user plane network element is reachable to the second LMF network element or indicating that the first user plane network element is unreachable to the second LMF network element.

In a possible implementation, in the embodiment shown in FIG. 7, after step 705, the method provided in this embodiment of this application may further include step 706 to step 709, and step 706 to step 709 are the same as step 514 to step 517. Details are not described herein again.

Optionally, in a possible embodiment of this application, first configuration information is configured in the first mobility management network element, and the first configuration information indicates that a service range of an LMF network element selected for the terminal needs to fall within a service range of the UPF network element. Therefore, when selecting the first LMF network element for the terminal, the first mobility management network element may determine an LMF network element whose service range falls within a service range of the first user plane network element as the first LMF network element. Therefore, if a location update of the terminal causes the first LMF network element to be unable to provide a service for the terminal, and if movement of the terminal causes the first user plane network element of the terminal to remain unchanged, the first mobility management network element may determine the second LMF network element in the following manner: The first mobility management network element determines, as the second LMF network element, an LMF network element whose service range falls within the service range of the first user plane network element and that can provide a service for the terminal. If the movement of the terminal causes the first user plane network element of the terminal to change to the second user plane network element, the first mobility management network element may determine the second LMF network element in the following manner: The first mobility management network element determines, as the second LMF network element, an LMF network element whose service range falls within a service range of the second user plane network element and that can provide a service for the terminal.

It may be understood that when the terminal has a locating dedicated DNN, the second LMF network element selected by the first mobility management network element for the terminal is an LMF network element supporting the locating dedicated DNN.

Optionally, a service range of the second LMF network element selected by the first mobility management network element for the terminal falls within the service range of the second user plane network element.

Optionally, the second LMF network element selected by the first mobility management network element for the terminal is an LMF network element whose service range falls within the service range of the second user plane network element and that supports the locating dedicated DNN.

The method provided in this embodiment of this application is described with reference to FIG. 5. As shown in FIG. 5, when a terminal needs to be located, the first mobility management network element selects the first LMF network element for the terminal. In this case, the terminal is located at a location 1, and the location 1 is located in the service range of the first LMF network element. Then, the first mobility management network element triggers the first LMF network element to locate the terminal. The first LMF network element establishes a first user plane secure connection with the terminal based on triggering of the first mobility management network element. After the first user plane secure connection is established, the first LMF network element may locate the terminal through the first user plane secure connection. Optionally, the first LMF network element sends first information to the first mobility management network element, to indicate that the first user plane secure connection exists between the terminal and the first LMF network element. Subsequently, when the terminal moves from the location 1 to a location 2, the terminal sends a mobility registration update request to the first mobility management network element. If the first mobility management network element determines, based on the mobility registration update request, that the location 2 of the terminal is outside the service range of the first LMF network element, and the first user plane secure connection exists between the terminal and the first LMF network element, the first mobility management network element may reselect the second LMF network element for the terminal. Then, the first mobility management network element triggers the first LMF network element to transfer the first user plane secure connection of the terminal to the second LMF network element.

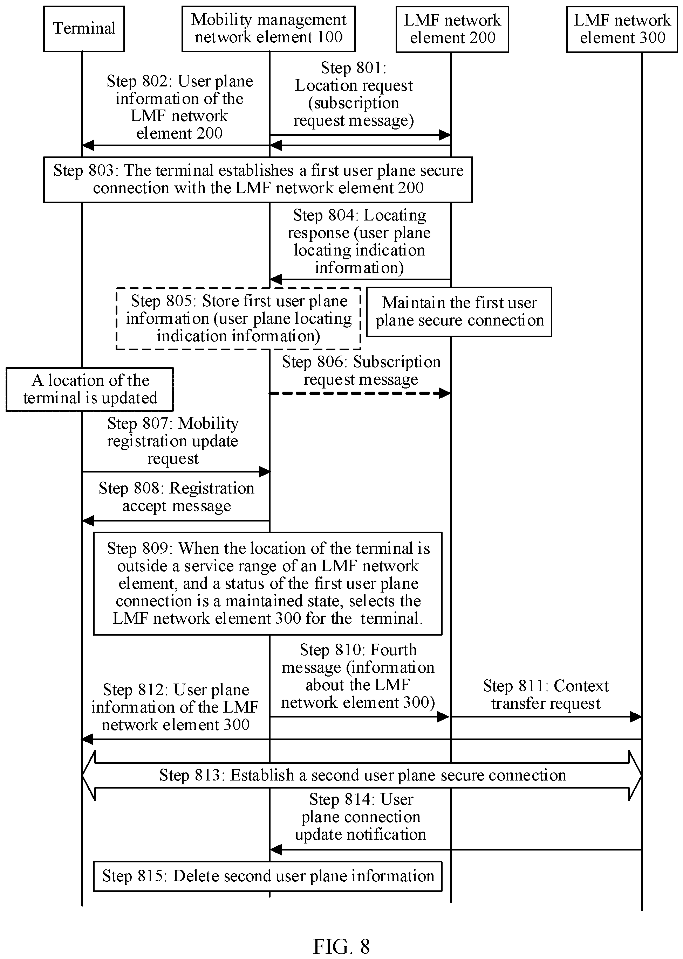

With reference to FIG. 2, FIG. 8 describes a network element switching method for user plane locating provided in this embodiment of this application by using an example in which a first mobility management network element is the mobility management network element 100, a first LMF network element is the LMF network element 200, and a second LMF network element is the LMF network element 300. The method includes the following steps.

Step 801: The mobility management network element 100 sends a location request to the LMF network element 200. Accordingly, the LMF network element 200 receives the location request from the mobility management network element 100. The location request is used to request the LMF network element 200 to locate a terminal.

Optionally, the location request carries a subscription request message, and carries address information (for example, a notification (notification) uniform resource locator (uniform resource locator, URL)) of the mobility management network element 100. The subscription request message is used to request to subscribe to a status of a user plane secure connection established between the LMF network element 200 and the terminal.

It should be noted that the mobility management network element 100 may send the location request to the LMF network element 200 based on a location provision request from the terminal/AF network element or an LCS client. In other words, optionally, before step 801, the method may further include: The mobility management network element 100 receives the location provision request from the terminal/AF network element or the LCS client. An AMF network element may determine, by using the location provision request, that the terminal needs to be located. Optionally, the location provision request may further indicate to perform the user plane locating on the terminal. Optionally, the location provision request may further carry an identifier of the terminal.

Optionally, before step 801, the method provided in this embodiment of this application may further include: The mobility management network element 100 selects the LMF network element 200 for the terminal. For a process in which the mobility management network element 100 selects the LMF network element 200 for the terminal, refer to a process in which the mobility management network element 100 selects an LMF network element described in the following embodiment. Details are not described herein again.

Step 802: The LMF network element 200 sends user plane information of the LMF network element 200 to the terminal by using the mobility management network element 100, and accordingly, the terminal receives the user plane information from the LMF network element 200.

In an example, the user plane information of the LMF network element 200 includes a locating dedicated DNN, single network slice selection assistance information (single network slice selection assistance information, S-NSSAI), security information, and an IP or FQDN of the LMF network element 200.

Step 803: The terminal establishes a first user plane secure connection with the LMF network element 200 based on the user plane information of the LMF network element 200.

It should be noted that after the terminal receives the user plane information of the LMF network element 200, if the terminal does not have a PDU session, the terminal may first establish a PDU session, and then establish the first user plane secure connection with the LMF network element 200 based on the established PDU session. For a specific process, refer to descriptions in a conventional technology. Details are not described herein. After the terminal receives the user plane information of the LMF network element 200, if the terminal already has a PDU session, the terminal may establish the first user plane secure connection with the LMF network element 200 based on the PDU session.

Optionally, after the first user plane secure connection is established between the terminal and the LMF network element 200, the terminal and the LMF network element 200 exchange an LTE positioning protocol (LTE positioning protocol, LPP) message based on the first user plane secure connection, to implement the user plane locating.

Step 804: The LMF network element 200 returns a locating response to the mobility management network element 100. Accordingly, the mobility management network element 100 receives the locating response from the LMF network element 200. The locating response includes user plane locating indication information. The user plane locating indication information indicates that the first user plane secure connection exists between the LMF network element 200 and the terminal, or indicates that a status of the first user plane secure connection between the LMF network element 200 and the terminal is a maintained state.

Optionally, after the LMF network element 200 completes locating of a service of the terminal through the first user plane secure connection, step 804 may be performed.

In this case, a current locating service may end, but the LMF network element 200 and the terminal still need to maintain the first user plane secure connection, so that locating of a subsequent locating service of the terminal is subsequently completed based on the first user plane secure connection. Because the first user plane secure connection may be used during locating of the subsequent locating service of the terminal, in comparison with re-establishing a user plane secure connection to locate the subsequent locating service, the method provided in this embodiment of this application can reduce a delay of the subsequent locating service.

Step 805: The mobility management network element 100 stores first user plane information. In an example, the first user plane information includes the user plane locating indication information (that is, first information) and an identifier of the LMF 200. Certainly, the user plane locating indication information may also be referred to as status information.

Optionally, after step 805, the method provided in this embodiment of this application, as shown in FIG. 8, may further include the following steps.

Step 806: After receiving the user plane locating indication information, the mobility management network element 100 sends a subscription request message to the LMF network element 200, and accordingly, the LMF network element 200 receives the subscription request message from the mobility management network element 100. The subscription request message includes a notification URL of the AMF network element.

Optionally, if the mobility management network element 100 does not subscribe to a status of a user plane secure connection from the LMF network element 200 in step 801, step 806 may be performed after step 805. Certainly, if the mobility management network element 100 performs a step of subscription in step 801, step 806 may still be performed after step 805. It is assumed that after step 806, the mobility management network element 100 obtains second information from the LMF network element 200. The second information indicates the status of the first user plane secure connection. If the status of the first user plane secure connection indicated by the second information is inconsistent with the status of the first user plane secure connection indicated by the user plane locating indication information, a status of the first user plane secure connection that is subscribed to from the LMF network element 200 after step 806 may be used.

Step 807: The terminal sends a mobility registration update (mobility registration update) request to the mobility management network element 100 by using a RAN. Accordingly, the mobility management network element 100 receives the mobility registration update request from the terminal. The mobile registration update request carries location information of the terminal.

Optionally, when forwarding the mobility registration update request to the mobility management network element 100, the RAN carries the location information (for example, a tracking area (TA)) of the terminal, and sends the location information to the AMF network element.

It may be understood that, the terminal sends the mobility registration update request to the mobility management network element 100, so that the AMF network element determines that a location of the terminal changes.

Step 808: The mobility management network element 100 sends a registration accept message to the terminal. Accordingly, the terminal receives the registration accept message from the mobility management network element 100.

It may be understood that after the AMF network element determines, in step 807, that the location of the terminal changes, the AMF network element may alternatively send a request message (for example, the subscription request message) to the LMF network element 200, to obtain, from the LMF network element 200, whether a user plane secure connection exists between the LMF network element 200 and the terminal.

Step 809: When the mobility management network element 100 determines, based on the user plane locating indication information, that the terminal has the first user plane secure connection and that a service range of the LMF network element 200 does not adapt to a current location of the terminal, the mobility management network element 100 selects the LMF network element 300 for the terminal.

It may be understood that the terminal is located in a service range of the LMF network element 300.

Step 810: The mobility management network element 100 sends a fourth message to the LMF 200. Accordingly, the LMF network element 200 receives the fourth message from the mobility management network element 100. The fourth message includes information about the LMF network element 300. The fourth message indicates the LMF 200 to transfer the user plane secure connection.

Optionally, the fourth message may carry fourth indication information, and the fourth indication information indicates the LMF 200 to transfer the user plane secure connection.

Certainly, one LMF network element may have a user plane secure connection with a plurality of terminals, and the fourth message may further carry an identifier of the terminal, for example, an identifier of a terminal A. In this way, for the LMF network element 200, after receiving the fourth message, the LMF network element 200 may determine to transfer a user plane secure connection between the LMF network element 200 and the terminal A.

Step 811: The LMF 200 sends a context transfer request to the LMF network element 300 based on the information about the LMF network element 300, and accordingly, the LMF network element 300 receives the context transfer request from the LMF network element 200. The context transfer request includes subscription request information of the mobility management network element 100.

Optionally, the context transfer request may further include a context of the first user plane secure connection.

Optionally, after step 811, the method may further include: The LMF network element 300 returns a transfer success response to the LMF network element 100, and accordingly, the LMF network element 300 receives the transfer success response from the LMF network element 100. The transfer success response is sent, so that the LMF network element 100 determines that the context of the first user plane secure connection is successfully transferred.

The subscription request information is sent to the LMF network element 300, so that the LMF network element 300 feeds back a status of a second user plane secure connection with the terminal to the mobility management network element 100 later.

Optionally, in the foregoing step 811, that the subscription request information of the AMF network element 100 is carried in the context transfer request is used as an example. In an actual process, the LMF 200 may alternatively send the subscription request information of the mobility management network element 100 to the LMF network element 300 by using another message. Alternatively, after step 811, if the AMF network element 100 determines that the context of the first user plane secure connection is successfully transferred, the AMF network element 100 sends the subscription request information of the mobility management network element 100 to the LMF network element 300.

Step 812: The LMF network element 300 sends user plane information of the LMF network element 300 to the terminal by using the mobility management network element 100. Accordingly, the terminal receives the user plane information from the LMF network element 300.

The user plane information of the LMF network element 300 is used by the terminal to establish the second user plane secure connection with the LMF network element 300.

In an example, the user plane information of the LMF network element 300 includes single network slice selection assistance information (single network slice selection assistance information, S-NSSAI), security information, and an internet protocol address (internet protocol address, IP) or a fully qualified domain name (fully qualified domain name, FQDN) of the LMF network element 300.

Optionally, the AMF network element 300 may alternatively send the subscription request message to the LMF network element 300 after the second user plane secure connection is established between the LMF network element 300 and the terminal.

Step 813: The terminal establishes the second user plane secure connection with the LMF network element 300 based on the user plane information of the LMF network element 300.

It may be understood that after the second user plane secure connection is established, if the mobility management network element 100 determines to locate the terminal, the mobility management network element 100 sends a location request to the LMF network element 300. Accordingly, after receiving the location request from the mobility management network element 100, the LMF network element 300 may locate the terminal through the second user plane secure connection.

In a possible implementation of this application, to help the mobility management network element 100 learn of a status of the second user plane secure connection between the terminal and the LMF network element 300, after the second user plane secure connection is established between the terminal and the LMF network element 300 in the method provided in this embodiment of this application, as shown in FIG. 8, the method may further include the following steps.

Step 814: The LMF network element 300 sends a user plane connection update notification to the mobility management network element 100. Accordingly, the mobility management network element 100 receives the user plane connection update notification from the LMF network element 300. The user plane connection update notification notifies that the second user plane secure connection between the terminal and the LMF network element 300 has been released or that the status of the second user plane secure connection is a released state.

Optionally, the user plane connection update notification includes a release notification message. In other words, the release notification message notifies that the status of the second user plane secure connection between the terminal and the LMF network element 300 is the released state.

In an example, when the LMF network element 300 determines to release the second user plane secure connection with the terminal, or determines that the terminal has released the second user plane secure connection, step 814 may be performed.

Optionally, when determining that there is no subsequent locating service, in other words, when there is no locating requirement, the LMF network element 300 or the terminal may release the second user plane secure connection. For example, the LMF network element 300 receives a location reporting cancellation message from the terminal or the AMF network element 100, so that the LMF network element 300 may determine to release the second user plane secure connection.

It may be understood that the LMF network element 300 may proactively send the user plane connection update notification to the mobility management network element 100, or send the user plane connection update notification to the mobility management network element 100 in response to the received subscription request message.

In the foregoing solution, the LMF network element 300 sends the user plane connection update notification to the mobility management network element 100, so that the AMF network element learns of the status of the second user plane secure connection.

Step 815: After receiving the user plane connection update notification, the mobility management network element 100 deletes second user plane information.

Optionally, after receiving the user plane connection update notification, the mobility management network element 100 immediately deletes the second user plane information, or deletes the second user plane information after preset time. The mobility management network element 100 deletes the second user plane information, so that memory occupation of the mobility management network element 100 can be reduced.

In the embodiment shown in FIG. 8, after establishing the first user plane secure connection with the terminal, the LMF network element 200 feeds back the first information to the terminal, so that the mobility management network element 100 can perceive existence of the first user plane secure connection. In this way, after the terminal moves, if the mobility management network element 100 determines that the terminal is outside the service range of the LMF network element 200, the mobility management network element 100 may reselect an LMF network element for the terminal, and trigger switching to the LMF network element 300. In this way, a user plane secure connection of the terminal can be maintained when there is no locating service. Because the second user plane secure connection already exists before the AMF network element triggers the LMF network element 300 to locate the terminal, if the terminal needs to be located subsequently, a process of establishing a user plane secure connection may be omitted. Therefore, in comparison with a case in which the LMF network element 300 establishes a user plane secure connection with the terminal after the location request is received, a delay of a subsequent locating service can be reduced.

In addition, the mobility management network element 100 subscribes to a status of a user plane secure connection from the LMF network element 200 or the LMF network element 300, to implement life cycle management of a storage resource on the mobility management network element 100. For example, if the user plane secure connection has been released, the mobility management network element 100 may delete corresponding user plane information.

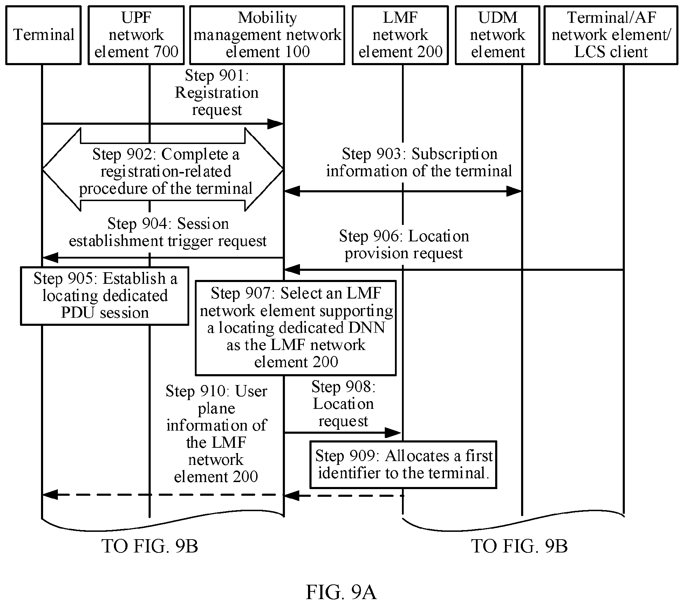

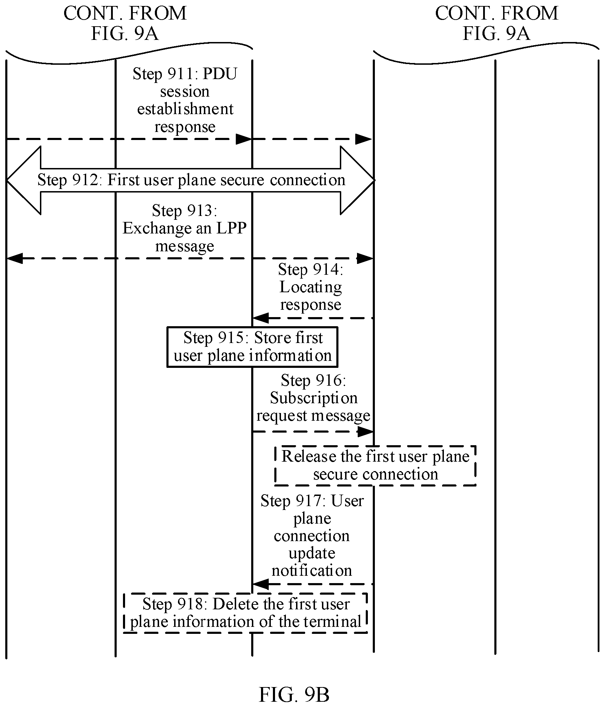

FIG. 9A and FIG. 9B show another network element switching method according to an embodiment of this application. In a solution shown in FIG. 9A and FIG. 9B, an end-to-end procedure of a single mobile originated location request (mobile originated location request, MO-LR) or a single mobile terminating location request (mobile terminating location request, MT-LR) is used as an example to describe how to perform locating based on a user plane and how a mobility management network element 100 perceives a status of a user plane secure connection. In comparison with the embodiment shown in FIG. 8, the method may further include: After a terminal is registered, the mobility management network element 100 may trigger, based on user plane locating capability information and subscription information of the terminal, the terminal to establish a locating dedicated PDU session, to reduce a delay of a subsequent locating service. When receiving a location request, the mobility management network element 100 selects, based on a locating dedicated DNN to which the terminal subscribes, a corresponding LMF network element supporting the locating dedicated DNN. When determining to use a user plane locating method, the LMF network element may allocate a temporary UE ID to the terminal and provide the temporary UE ID to the terminal. The terminal may establish a user plane secure connection with the LMF network element by using the temporary ID. A specific process is shown in FIG. 9A and FIG. 9B. The method includes the following steps.

Step 901: The terminal sends a registration request to the mobility management network element 100. Accordingly, the mobility management network element 100 receives the registration request from the terminal. The registration request carries user plane locating capability information. The user plane locating capability information indicates that the terminal supports user plane locating or has a user plane locating capability.

Step 902: The mobility management network element 100 completes a registration-related procedure of the terminal based on the registration request.

For a specific implementation of step 902, refer to descriptions in a conventional technology. Details are not described in this embodiment of this application.

Step 903: The mobility management network element 100 obtains subscription information of the terminal from a UDM network element. The subscription information includes a locating dedicated DNN.

Optionally, the mobility management network element 100 stores the user plane locating capability information of the terminal and the locating dedicated DNN.

Step 904: The mobility management network element 100 sends a session establishment trigger request to the terminal. Accordingly, the terminal receives the session establishment trigger request from the mobility management network element 100.

The session establishment trigger request includes the user plane locating capability information of the terminal and the subscription information of the terminal.

Step 905: The terminal establishes a locating dedicated PDU session with the locating dedicated DNN based on the session establishment trigger request.

In a possible implementation of this application, as shown in FIG. 9A and FIG. 9B, after step 905, the method provided in this embodiment of this application may further include the following steps.

Step 906: The mobility management network element 100 receives a location provision request from an AF network element, an LCS client, or the terminal.

It may be understood that the location provision request is used to request to locate the terminal. Optionally, the mobility management network element 100 may receive the location provision request from the AF network element, the LCS client, or the terminal by using a GMLC network element. In an example, the location provision request carries location information of the terminal and identification information of the terminal.

Step 907: The mobility management network element 100 selects, based on the user plane locating capability information of the terminal and the locating dedicated DNN, an LMF network element supporting the locating dedicated DNN as an LMF network element 200.

Step 908: The mobility management network element 100 sends a location request to the LMF network element 200. Accordingly, the LMF network element 200 receives the location request from the mobility management network element 100.

The location request carries a locating dedicated DNN to which the terminal subscribes. Same as the embodiment shown in FIG. 9A and FIG. 9B, optionally, the location request may further carry a notification URL of the mobility management network element 100 for subscribing to a status of a user plane connection.

Step 909: The LMF network element 200 determines, based on the location request, to use the user plane locating method, and allocates a first identifier to the terminal. Optionally, the first identifier may be considered as a temporary UE ID allocated to the terminal.

Step 910: The LMF network element 200 sends user plane information of the LMF network element 200 to the terminal by using the mobility management network element 100. Accordingly, the terminal receives the user plane information from the LMF network element 200 by using the mobility management network element 100.c

Optionally, the user plane information of the LMF network element 200 includes a locating dedicated DNN, an S-NSSAI, security information, an IP or FQDN of the LMF network element 200, and a first identifier.

It should be noted that if the terminal does not establish a PDU session before step 910, a step of establishing the PDU session may be performed after the user plane information of the LMF network element 200 is received.

Optionally, when the terminal establishes the PDU session based on the user plane information of the LMF network element 200 or the PDU session has been established, the following step 911 is performed.

Step 911: The terminal returns a PDU session establishment response to the LMF network element 200 by using the mobility management network element 100. Accordingly, the LMF network element 200 receives the PDU session establishment response from the terminal.

Optionally, if the session fails to be established, the terminal returns an establishment failure message.

Step 912: The terminal establishes a first user plane secure connection with the LMF network element 200 based on the PDU session and the user plane information of the LMF network element 200.

It should be noted that if the locating dedicated PDU session has been established between the terminal and the locating dedicated DNN before step 910, in step 912, the terminal establishes the first user plane secure connection with the LMF network element 200 based on the locating dedicated PDU session and the user plane information of the LMF network element 200.

Optionally, if the user plane information of the LMF network element 200 includes the first identifier, the terminal may further use the first identifier to establish the first user plane secure connection with the LMF network element 200. A protocol used for the first user plane secure connection may be TLS over TCP.

Step 913: The terminal and the LMF network element 200 exchange an LPP message based on the first user plane secure connection.

In a possible embodiment of this application, as shown in FIG. 9A and FIG. 9B, after step 913, the method provided in this embodiment of this application may further include the following steps.

Step 914: The LMF network element 200 sends a locating response to the mobility management network element 100. Accordingly, the LMF network element 200 receives the locating response from the mobility management network element 100.

The locating response carries user plane locating indication information (that is, the first information).

Step 915: The mobility management network element 100 stores first user plane information. The first user plane information includes the user plane locating indication information and an identifier of the LMF network element 100.

It should be noted that the foregoing step 915 is an optional step.

Step 916: After receiving the user plane locating indication information, the mobility management network element 100 sends a subscription request message to the LMF network element 200. Accordingly, the LMF network element 200 receives the subscription request message from the mobility management network element 100. The subscription request message includes a notification URL of an AMF network element.

Step 917: The LMF network element 200 sends a user plane connection update notification to the mobility management network element 100. Accordingly, the mobility management network element 100 receives the user plane connection update notification from the LMF network element 200. The user plane connection update notification notifies that the first user plane secure connection between the terminal and the LMF network element 200 has been released.

In an example, when determining that there is no subsequent locating service, in other words, when there is no locating requirement, the LMF network element 200 or the terminal may release a second user plane secure connection. For example, the LMF network element 200 receives a location reporting cancellation message from the terminal or an AMF network element 100, so that the LMF network element 200 may determine to release the first user plane secure connection.

Optionally, the user plane connection update notification includes a release notification message. That is, the release notification message notifies that a status of the first user plane secure connection is a released state.

It may be understood that the LMF network element 200 may proactively send the user plane connection update notification to the mobility management network element 100, or send the user plane connection update notification to the mobility management network element 100 in response to the received subscription request message.

In the foregoing solution, the LMF network element 200 sends the user plane connection update notification to the mobility management network element 100, so that the mobility management network element 100 learns of the status of the first user plane secure connection.

Step 918: After receiving the user plane connection update notification, the mobility management network element 100 deletes the first user plane information of the terminal.

Optionally, after receiving the user plane connection update notification, the mobility management network element 100 immediately deletes the first user plane information, or deletes the first user plane information of the terminal after preset time. The mobility management network element 100 deletes the first user plane information, so that memory occupation of the mobility management network element 100 can be reduced.

Optionally, after step 916, if the first information sent by the LMF network element 200 to the mobility management network element 100 indicates that the first user plane secure connection exists between the terminal and the first LMF network element 200, after a location of the terminal is updated, and when the location of the terminal is outside a service range of the LMF network element 200, the embodiment shown in FIG. 9A and FIG. 9B may alternatively include step 909 to step 915. In other words, the foregoing step 917 and step 918 may be replaced with step 909 to step 915.

It should be noted that the user plane locating indication information in FIG. 8 and FIG. 9A and FIG. 9B may alternatively be replaced with the user plane locating method.

In the embodiment shown in FIG. 9A and FIG. 9B, after the terminal is registered, the mobility management network element 100 may trigger, based on the user plane locating capability information and the subscription information of the terminal, the terminal to establish the locating dedicated PDU session in advance before the terminal is located. When a subsequent location request arrives, a session establishment procedure is avoided. Therefore, a delay of the locating service can be reduced. The temporary UE ID (that is, the first identifier) is allocated by the LMF network element, so that locating user plane secure connections of different terminals can be distinguished. In addition, the terminal establishes the first user plane secure connection with the LMF network element 200 by using the first identifier. The first identifier is allocated to the terminal. Because the first identifier is a temporary identifier, leakage of terminal privacy can be reduced.

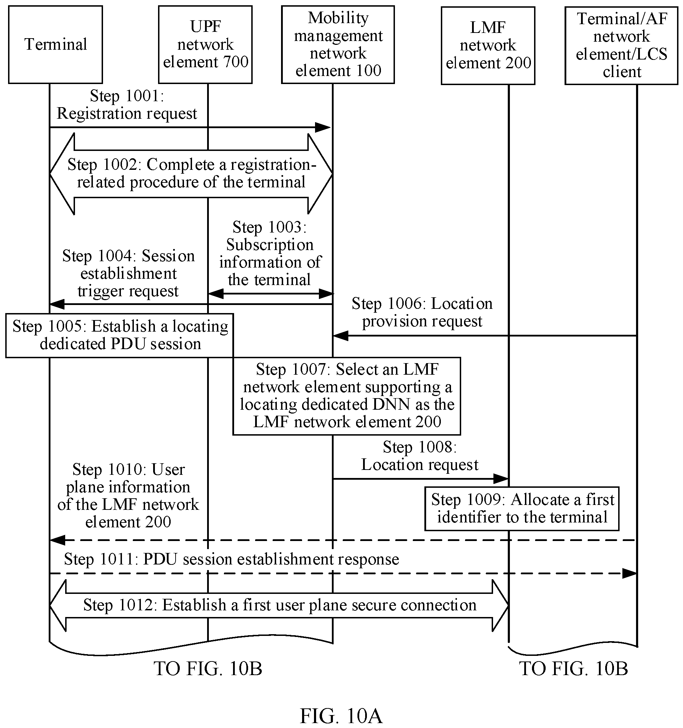

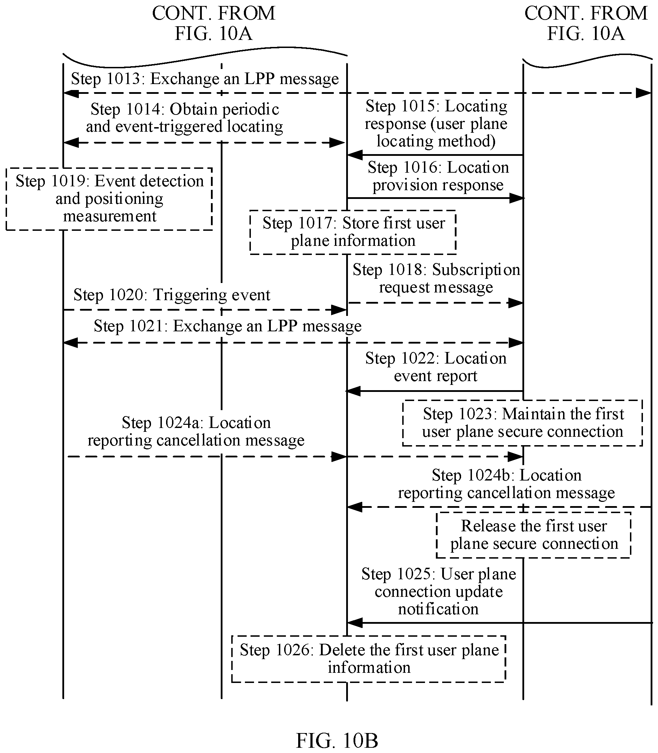

FIG. 10A and FIG. 10B show another possible embodiment of this application. The method includes the following steps.

Step 1001 to step 1013 are the same as step 901 to step 913. Details are not described herein again.

A difference lies in that a delayed MT-LR location request is from an AF network element or LCS client.

Optionally, after step 1013, the method may further include step 1014.

Step 1014: A mobility management network element 100 obtains periodic and event-triggered locating from a terminal.

In an example, for the periodic and event-triggered locating, step 1014 may be implemented in the following manner: The mobility management network element 100 sends a request to the terminal, and the terminal returns a response. The response includes the periodic and event-triggered locating.

Step 1015 is the same as step 914, and a difference lies in that in step 1015, an LMF network element 200 feeds back third indication information to the mobility management network element 100, and the third indication information indicates a user plane locating method.

Certainly, in step 1015, user plane locating indication information, or the user plane locating indication information and the user plane locating method may alternatively be fed back to the mobility management network element 100.

Step 1016: The mobility management network element 100 sends a location provision response to the LMF network element 200, and accordingly, the LMF network element 200 receives the location provision response from the terminal.

Step 1017: The mobility management network element 100 stores first user plane information. The first user plane information includes the third indication information and an identifier of the LMF network element 200 (because a life cycle of the periodic locating may be shorter than a life cycle of a user plane secure connection, an identifier of an LMF network element is separately stored in different contexts).

Optionally, if the LMF network element 200 further sends the user plane locating indication information to the mobility management network element 100 in step 1015, the first user plane information in step 1017 may further include the user plane locating indication information.

Step 1018 is the same as step 916.

Optionally, in the embodiment shown in FIG. 10A and FIG. 10B, in a possible embodiment of this application, after step 1014, the method may further include the following steps.

Step 1019: The terminal performs event detection and positioning measurement.

Step 1020: After detecting an event, the terminal triggers reporting of the event to the mobility management network element 100. Accordingly, the mobility management network element 100 receives the event reported by the terminal.

Optionally, the mobility management network element 100 may further send a response to the terminal, to indicate that the event reported by the terminal is received.

Step 1021: The terminal and the LMF network element 200 exchange an LPP message based on a first user plane secure connection.

A difference lies in that for locating of a reachable event type of the terminal, after the locating is completed, the LMF network element 200 may still maintain the first user plane secure connection, in other words, may not release the first user plane secure connection.

Step 1022: The LMF network element 200 sends a location event report to the mobility management network element 100, and accordingly, the mobility management network element 100 receives the location event report from the LMF network element 200.

Optionally, after step 1022, the LMF network element 200 may further perform step 1022.

Step 1023: For the locating of the reachable event type of the terminal, the LMF network element 200 maintains the first user plane secure connection.

It should be noted that, if the first user plane secure connection still exists between the LMF network element 200 and the terminal after step 1023, the embodiment shown in FIG. 10A and FIG. 10B may further include step 807 to step 815.

Optionally, if the first user plane secure connection between the terminal and the LMF network element 200 is released after step 1023, the embodiment shown in FIG. 10A and FIG. 10B may further include the following steps.

Step 1024a: The terminal sends a location reporting cancellation message to the LMF network element 200 by using the mobility management network element 100. Alternatively, in step 1024b, if the AF network element or the LCS client sends the location reporting cancellation message to the mobility management network element 100, the mobility management network element 100 may send the location reporting cancellation message to the LMF network element 200.

Step 1025: The LMF network element 200 sends a user plane connection update notification to the mobility management network element 100. Same as the descriptions in step 917, details are not described herein again.

Optionally, after step 1025, the method provided in this embodiment of this application may further include step 1026, and step 1026 is the same as step 918. Details are not described herein again.

In the embodiment shown in FIG. 10A and FIG. 10B, for user plane locating implemented in a delayed locating MT-LR procedure, the mobility management network element 100 perceives the user plane locating method and user plane secure connection indication information.

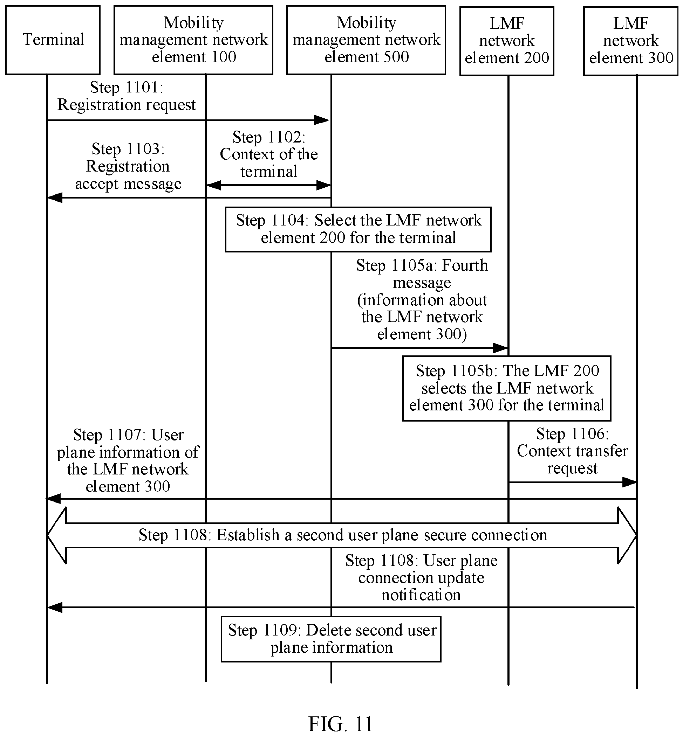

Due to movement of the terminal, the AMF network element accessed by the terminal may change. For example, the mobility management network element 100 accessed by the terminal is updated to a mobility management network element 500, and the mobility management network element 500 needs to obtain a context of the terminal from the mobility management network element 100. The context of the terminal includes at least a locating-related context. In addition, the LMF network element 100 may alternatively initiate, based on a user plane secure connection context, reselection of an LMF network element. A specific process is shown in FIG. 11.

Step 1101: A terminal sends a registration request to a mobility management network element 500, and accordingly, the mobility management network element 500 receives the registration request from the terminal.

Optionally, the terminal may send the registration request to the mobility management network element 500 by using a RAN. The registration request may carry location information of the terminal.

Step 1102: The mobility management network element 500 obtains a context of the terminal from a mobility management network element 100.

In an example, step 1102 may be implemented in the following manner: The mobility management network element 500 sends a context transmission request to the mobility management network element 100. Accordingly, after receiving the context transmission request, the mobility management network element 100 may send a context transmission response to the mobility management network element 500. The context transmission response includes user plane locating capability information of the terminal, user plane secure connection indication information, and an identifier of an LMF network element 100, or further includes a locating dedicated DNN to which the terminal subscribes.

Step 1103: The mobility management network element 500 sends a registration accept (registration accept) message to the terminal. Accordingly, the terminal receives the registration accept message from the mobility management network element 500.

Optionally, as shown in FIG. 11, after step 1103, the method provided in this embodiment of this application may include: An LMF network element 200 determines information about an LMF network element 300 reselected for the terminal.

In an example, the LMF network element 200 may determine the information about the LMF network element 300 reselected for the terminal by using the following step 1105a or step 1105b.

Optionally, in a possible embodiment of this application, as shown in FIG. 11, the method provided in this embodiment of this application may include step 1104 and step 1105a to step 1109; or step 1105b to step 1109. Step 1105b to step 1109 or step 1105a to step 1109 are the same as step 810 to step 815. Details are not described herein again.

Step 1104: If the mobility management network element 500 perceives, based on the user plane secure connection indication information, that the terminal currently has a first user plane secure connection for locating, and discovers, based on the location information of the terminal obtained from the RAN, that the terminal is outside a service range of the LMF network element 200, the mobility management network element 500 selects the LMF network element 300 for the terminal.

For a specific implementation of the foregoing step 1104, refer to the implementation of step 907. Optionally, when the context transmission response does not include the locating dedicated DNN to which the terminal subscribes, the mobility management network element 500 does not need to determine whether the locating dedicated DNN is supported when selecting the LMF network element 300.

Step 1105a: The mobility management network element 500 sends the information about the LMF network element 300 to the LMF network element 200, and accordingly, the LMF network element 200 receives the information about the LMF network element 300 from the mobility management network element 500.

Step 1105b: If the mobility management network element 500 does not perform LMF reselection, the LMF network element 200 selects the LMF network element 300 for the terminal.

It may be understood that the LMF network element 200 may select the LMF network element 300 for the terminal based on a user plane context of the terminal. The user plane context of the terminal includes at least a context of the first user plane secure connection of the terminal.

If the LMF network element 200 determines that the terminal has the subscribed locating dedicated DNN, the LMF network element 100 selects, based on the locating dedicated DNN, a corresponding LMF network element 300 supporting the DNN.

In an example, if the LMF network element 200 determines that load is greater than or equal to a first load threshold or that a user plane delay increases, the LMF 200 selects the LMF network element 300 for the terminal.

Step 1106 is the same as step 812, and a difference lies in that user plane information of the LMF network element 300 in step 1106 may further carry a first identifier allocated by the LMF network element 300 to the terminal.

In an example, the LMF network element 300 may send the user plane information of the LMF network element 300 to the terminal by using the mobility management network element 500, to request to establish a second user plane secure connection with the terminal. For example, the LMF network element 300 sends a user plane locating connection creation request to the mobility management network element 500. Then, the mobility management network element 500 sends the user plane locating connection creation request to the terminal. The user plane locating connection creation request includes the user plane information of the LMF network element 300. Optionally, the user plane locating connection creation request may further include information indicating the terminal to establish the second user plane secure connection.

Step 1107: The terminal establishes the second user plane secure connection with the LMF network element 300 based on the user plane information of the LMF network element 300.

Step 1108 and step 1109 are the same as step 814 and step 815. Details are not described herein again.

In the embodiment shown in FIG. 11, when a mobility management network element supporting access of the terminal is updated from the mobility management network element 100 to the mobility management network element 500, the mobility management network element 500 can still perceive existence of the first user plane secure connection, and when the location of the terminal is outside the service range of the LMF network element 200, the mobility management network element 500 initiates LMF network element reselection. In addition, in the embodiment shown in FIG. 11, that the LMF network element 100 reselects an LMF network element (for example, the LMF network element 200) for the terminal is supported.

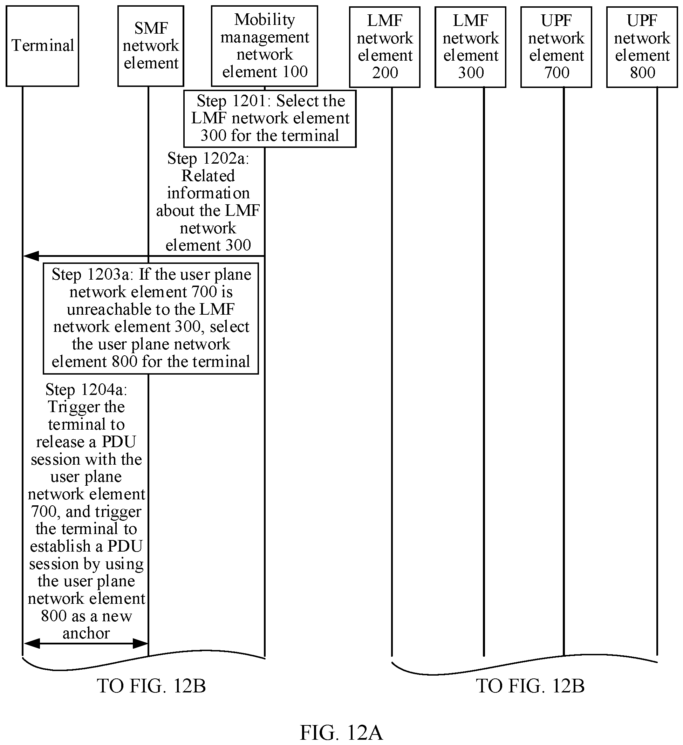

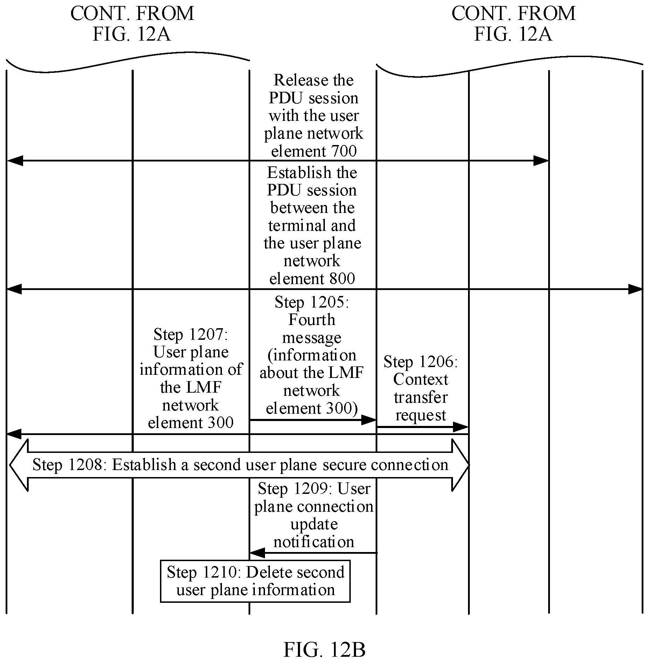

In an actual scenario, after the terminal moves, a PDU session anchor (a UPF network element) may need to be switched. In this case, switching of the UPF network element is coordinated with the LMF network element reselection. This avoids a case in which the terminal cannot access the LMF network element 300 by using a user plane network element 700 after the LMF network element is switched. Based on this, FIG. 12A and FIG. 12B are a schematic flowchart of another method according to an embodiment of this application. The method includes Solution 1 and Solution 2.

Solution 1 includes step 1201, step 1202a, step 1203a, step 1204a, and step 1205 to step 1209. Solution 2 includes step 1201, step 1202b, step 1203b, and step 1205 to step 1209.

Step 1201: If a mobility management network element 100 determines that a location of a terminal is updated, and the terminal is outside a service range of an LMF network element 200, the mobility management network element 100 selects an LMF network element 300 for the terminal.

Alternatively, step 1201 may be implemented in the following manner: If the mobility management network element 100 determines, based on first configuration information, that the service range of the LMF network element 200 falls within a service range of a user plane network element 700, and the terminal is outside the service range of the LMF network element 200, the mobility management network element 100 selects an LMF network element that is reachable to the user plane network element 700 as the LMF network element 300.

For a specific implementation of the foregoing step 1201, refer to the foregoing step 801 to step 809. Details are not described herein. That a service range of an LMF network element falls within a service range of a user plane network element in this embodiment of this application may be understood as that the service range of the LMF network element is the same as the service range of the user plane network element, or that the service range of the LMF network element is included in the service range of the user plane network element.

Step 1202a: The mobility management network element 100 sends related information about the LMF network element 300 to an SMF network element, and accordingly, the SMF network element receives the related information about the LMF network element 300 from the mobility management network element 100.

The related information about the LMF network element 300 may be a data network access identifier (data network access identifier, DNAI) corresponding to a connection between the LMF network element 300 and a user plane network element 800, or an identifier of the LMF network element 300.

Optionally, when sending the related information about the LMF network element 300 to the SMF network element, the mobility management network element 100 may further indicate the SMF network element to determine whether the LMF network element 300 is reachable to the user plane network element 700 accessed by the terminal.

It should be noted that, if, as a result of a location update of the terminal, the AMF network element accessed by the terminal is updated from the mobility management network element 100 to the mobility management network element 500, the mobility management network element 100 shown in FIG. 12A and FIG. 12B may be replaced with the mobility management network element 500.

Optionally, the mobility management network element 500 needs to send location information of the terminal and information about the AMF network element 300 to the SMF network element.

Step 1203a: The SMF network element determines a reachable relationship between the user plane network element 700 and the LMF network element 300 based on the information about the LMF network element 300, if the user plane network element 700 is unreachable to the LMF network element 300, the SMF network element initiates UPF reselection, and the SMF network element selects, based on the identifier of the LMF 300, a user plane network element 800 connected to the LMF 300.

Step 1204a: The SMF network element triggers the terminal to release a PDU session with the user plane network element 700, and triggers the terminal to establish a PDU session by using the user plane network element 800 as a new anchor.

The embodiment shown in FIG. 12A and FIG. 12B includes two coordination manners. In one manner, when reselecting an LMF network element, the AMF network element sends information about the reselected LMF network element 300 to the SMF network element, and the SMF network element determines whether UPF network element switching needs to be performed. In a coordination manner, configuration is performed to ensure that a service range of the LMF network element is less than a service range of a UPF network element. When the UPF network element is switched, the LMF network element is also switched correspondingly, so that when the terminal moves, a session anchor UPF network element and a currently used LMF network element always have a user plane connection relationship.

Step 1205 to step 1210 are the same as step 810 to step 815. Details are not described herein again.

In the technology shown in FIG. 12A and FIG. 12B, after the terminal moves, and when the mobility management network element 100 determines to switch the LMF network element for the terminal, in one aspect, when the LMF network element is reselected by using the mobility management network element 100, the information about the LMF network element 300 is sent to the SMF network element. The SMF network element determines whether the UPF network element needs to be switched, and when determining that the LMF network element 300 is unreachable to the user plane network element 700, the SMF network element selects the user plane network element 800 for the terminal. In this way, the user plane session anchor UPF network element may always be reachable to the second LMF network element. In another aspect, when the mobility management network element 100 determines to switch the LMF network element for the terminal, an LMF network element whose service range falls within a service range of the user plane network element 700 is selected when a second LMF network element is selected, or the LMF network element whose service range falls within the service range of the user plane network element 700 is selected when a first LMF network element is selected. In this way, when a user plane network element of the terminal changes, the LMF network element also sends corresponding switching, so that when the terminal moves, the session anchor UPF and the currently used LMF network element always have the user plane connection relationship. This ensures continuity of a user plane secure connection to reduce a delay of a subsequent locating service.

The foregoing mainly describes the solutions in embodiments of this application from a perspective of interaction between network elements. It may be understood that, to implement the foregoing functions, the network elements such as the first mobility management network element and the first LMF network element include corresponding structures and/or software modules for performing the functions. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional unit division may be performed on the first mobility management network element and the first LMF network element based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division. During actual implementation, another division manner may be used.

The foregoing describes the method in embodiments of this application with reference to FIG. 4 to FIG. 12A and FIG. 12B. The following describes a communication apparatus that is provided in embodiments of this application and that performs the foregoing method. A person skilled in the art may understand that the method and the apparatus may be mutually combined and referenced. The communication apparatus provided in embodiments of this application may perform the steps performed by the first mobility management network element and the first LMF network element in the foregoing analysis methods.

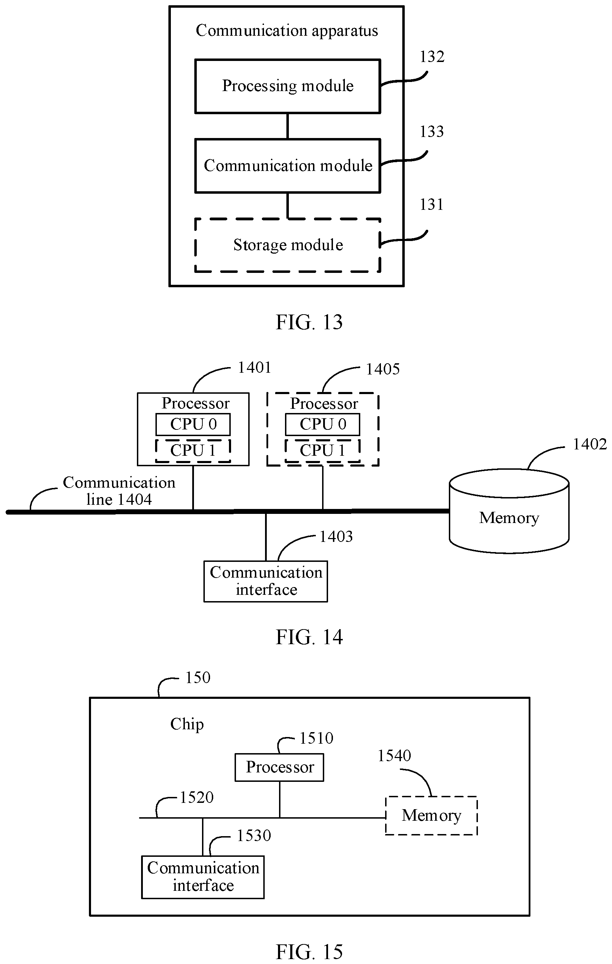

When an integrated unit is used, FIG. 13 shows a communication apparatus in the foregoing embodiments. The communication apparatus may include a communication module 133 and a processing module 132.

In an optional implementation, the communication apparatus may further include a storage module 131, configured to store program code and data of the communication apparatus.

In an example, the communication apparatus is a first mobility management network element, or a chip used in the first mobility management network element. In this case, the communication module 133 is configured to support the communication apparatus in communicating with an external network element (for example, a first LMF network element, a terminal, or an SMF network element). For example, the communication module 133 is configured to perform signal receiving and sending operations of the first mobility management network element in the foregoing method embodiments. The processing module 132 is configured to perform a signal processing operation of the first mobility management network element in the foregoing method embodiments.

For example, the communication module 133 is configured to perform a receiving action performed by the first mobility management network element in step 401 in FIG. 4. The processing module 132 is configured to support the communication apparatus in performing actions performed by the first mobility management network element in step 402 and step 403 in FIG. 4.

Optionally, as shown in FIG. 5, the communication module 133 is further configured to perform actions performed by the first mobility management network element in step 501 and step 502, sending actions performed by the first mobility management network element in step 503 and step 506, and a receiving step performed by the first mobility management network element in step 508 shown in FIG. 5.

Optionally, as shown in FIG. 5, the communication module 133 is further configured to support step 505 in FIG. 5 in the foregoing embodiments. The storage module 131 is configured to perform step 509.

Optionally, the communication module 133 is further configured to perform a sending step performed by the first mobility management network element in step 510, and a receiving action performed by the first mobility management network element in step 511 in FIG. 5.

Optionally, the processing module 132 is further configured to perform step 512 performed by the first mobility management network element in step 510 in FIG. 5.

In a possible implementation of this application, the communication module 133 is further configured to perform a sending step performed by the first mobility management network element in step 514 in FIG. 5.

In a possible implementation of this application, the communication module 133 is further configured to perform a receiving step performed by the first mobility management network element in step 516 in FIG. 5. The processing module 132 is further configured to perform step 517 in FIG. 5.

In a possible implementation of this application, the communication module 133 is further configured to perform step 704.

In another example, the communication apparatus is a first LMF network element, or is a chip used in the first LMF network element. In this case, the communication module 133 is configured to support the communication apparatus in communicating with an external network element (for example, the first mobility management network element or a second LMF network element). For example, the communication module 133 is configured to perform signal receiving and sending operations of the first LMF network element in the foregoing method embodiments. The processing module 132 is configured to perform a signal processing operation of the first LMF network element in the foregoing method embodiments.

For example, the processing module 132 is configured to perform step 507 in FIG. 5 in the foregoing embodiments. The communication module 133 is configured to perform a sending action performed by the first LMF network element in step 508 in FIG. 5 in the foregoing embodiments.

In a possible implementation of this application, the communication module 133 is configured to perform a receiving action performed by the first LMF network element in step 506 in FIG. 5 in the foregoing embodiments.

In a possible implementation of this application, the communication module 133 is configured to perform a receiving action performed by the first LMF network element in step 510 in FIG. 5 in the foregoing embodiments.

In a possible implementation of this application, the communication module 133 is configured to perform a sending action performed by the first LMF network element in step 511 in FIG. 5 in the foregoing embodiments.

In a possible implementation of this application, the communication module 133 is configured to perform a receiving action performed by the first LMF network element in step 514 and a sending action in step 515 in FIG. 5 in the foregoing embodiments.

It should be noted that the communication module 133 shown in FIG. 13 may be alternatively replaced with a communication unit, and the processing module 132 may be alternatively replaced with reference to a processing unit. The storage module 131 may alternatively be replaced with a storage unit. The processing unit is configured to control and manage actions of the communication apparatus. For example, the processing unit is configured to perform an information/data processing step performed by the communication apparatus. The communication unit is configured to support the communication apparatus in performing an information/data sending or receiving step.

In a possible implementation, the communication unit may include a receiving unit and a sending unit. The receiving unit is configured to receive a signal, and the sending unit is configured to send a signal.

The processing module 132 may be a processor or controller, for example, may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors or a combination of a digital signal processor and a microprocessor. The communication module may be a transceiver, a transceiver circuit, a communication interface, or the like. The storage module may be a memory.

When the processing module 132 is a processor 1401 or a processor 1405, the communication module 133 is a communication interface 1403, and the storage module 131 is a memory 1402, the communication apparatus in this application may be a communication device shown in FIG. 14.

FIG. 14 is a diagram of a hardware structure of a communication device according to an embodiment of this application. For structures of the first mobility management network element and the first LMF network element in this embodiment of this application, refer to a diagram of a structure of a communication device shown in FIG. 14. The communication device includes a processor 1401, a communication line 1404, and at least one communication interface (a communication interface 1403 is used as an example in FIG. 14 for description).

The processor 1401 may be a general-purpose central processing unit (central processing unit, CPU), a microprocessor, an application-specific integrated circuit (application-specific integrated circuit, ASIC), or one or more integrated circuits for controlling program execution of the solutions of this application.

The communication line 1404 may include a path for transferring information between the foregoing components.

The communication interface 1403 is configured to exchange information with another apparatus by using, for example, any type of apparatus such as a transceiver, and is configured to communicate with another device or a communication network, for example, an Ethernet, a radio access network (radio access network, RAN), or a wireless local area network (wireless local area network, WLAN).

Optionally, the communication device may further include a memory 1402.

The memory 1402 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium that can be configured to carry or store expected program code in a form of instructions or a data structure and that can be accessed by a computer. However, the memory is not limited thereto. The memory may exist independently, and is connected to the processor through the communication line 1404. Alternatively, the memory may be integrated with the processor.

The memory 1402 is configured to store computer-executable instructions for performing the solutions in this application, and the processor 1401 controls execution of the computer-executable instructions. The processor 1401 is configured to execute the computer-executable instructions stored in the memory 1402, to implement a network element switching method provided in the following embodiments of this application.

Optionally, the computer-executable instruction in this embodiment of this application may also be referred to as application program code. This is not specifically limited in this embodiment of this application.

During specific implementation, in an embodiment, the processor 1401 may include one or more CPUs, for example, a CPU 0 and a CPU 1 shown in FIG. 14.

During specific implementation, in an embodiment, the communication device may include a plurality of processors, for example, the processor 1401 and the processor 1405 in FIG. 14. Each of the processors may be a single-core (single-CPU) processor, or may be a multi-core (multi-CPU) processor. The processor herein may be one or more devices, circuits, and/or processing cores configured to process data (for example, computer program instructions).

FIG. 15 is a diagram of a structure of a chip 150 according to an embodiment of this application. The chip 150 includes one or more than two (including two) processors 1510 and a communication interface 1530.

Optionally, the chip 150 further includes a memory 1540. The memory 1540 may include a read-only memory and a random access memory, and provide operation instructions and data for the processor 1510. A part of the memory 1540 may further include a non-volatile random access memory (non-volatile random access memory, NVRAM).

In some implementations, the memory 1540 stores the following elements: an execution module or a data structure, a subset thereof, or an extension set thereof.

In this embodiment of this application, the operation instructions (the operation instructions may be stored in an operating system) stored in the memory 1540 are invoked to perform corresponding operations.

In a possible implementation, structures of chips used by the first LMF network element and the first mobility management network element are similar, and different apparatuses may use different chips to implement respective functions.

The processor 1510 controls a processing operation of either the first LMF network element or the first mobility management network element. The processor 1510 may also be referred to as a central processing unit (central processing unit, CPU).

The memory 1540 may include a read-only memory and a random access memory, and provide instructions and data for the processor 1510. A part of the memory 1540 may further include an NVRAM. For example, in an application, the memory 1540, the communication interface 1530, and the memory 1540 are coupled together through a bus system 1520. The bus system 1520 may further include a power bus, a control bus, a status signal bus, and the like in addition to a data bus. However, for clear description, various types of buses in FIG. 15 are marked as the bus system 1520.

The method disclosed in the foregoing embodiments of this application may be applied to the processor 1510, or implemented by the processor 1510. The processor 1510 may be an integrated circuit chip, and has a signal processing capability. In an implementation process, the steps in the foregoing method may be implemented by using a hardware integrated logical circuit in the processor 1510, or by using instructions in a form of software. The foregoing processor 1510 may be a general-purpose processor, a digital signal processor (digital signal processing, DSP), an ASIC, a field-programmable gate array (field-programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly executed and accomplished by using a hardware decoding processor, or may be executed and accomplished by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 1540. The processor 1510 reads information in the memory 1540, and completes the steps of the foregoing methods in combination with the hardware of the processor 1510.

In a possible implementation, the communication interface 1530 is configured to perform receiving and sending steps of the first LMF network element and the first mobility management network element in the embodiments shown in FIG. 4 to FIG. 12A and FIG. 12B. The processor 1510 is configured to perform processing steps of the first LMF network element and the first mobility management network element in the embodiments shown in FIG. 4 to FIG. 12A and FIG. 12B.

The foregoing communication module may be a communication interface of the apparatus, and is configured to receive a signal from another apparatus. For example, when the apparatus is implemented in a chip manner, the communication module is a communication interface used by the chip to receive a signal or send a signal from another chip or apparatus.

According to an aspect, a computer-readable storage medium is provided. The computer-readable storage medium stores instructions. When the instructions are run, a function performed by the first LMF network element in any one of the embodiments shown in FIG. 4 to FIG. 12A and FIG. 12B is implemented.

According to an aspect, a computer-readable storage medium is provided. The computer-readable storage medium stores instructions. When the instructions are run, a function performed by the first mobility management network element in any one of the embodiments shown in FIG. 4 to FIG. 12A and FIG. 12B is implemented.

According to another aspect, a computer program product including instructions is provided. The computer program product includes the instructions. When the instructions are run, the function performed by the first mobility management network element in any one of the embodiments shown in FIG. 4 to FIG. 12A and FIG. 12B is implemented.

According to an aspect, a computer program product including instructions is provided. The computer program product includes the instructions. When the instructions are run, the function performed by the first LMF network element in any one of the embodiments shown in FIG. 4 to FIG. 12A and FIG. 12B is implemented.

According to an aspect, a chip is provided. The chip is used in a first mobility management network element, the chip includes at least one processor and a communication interface, the communication interface is coupled to the at least one processor, and the processor is configured to run instructions, to implement the function performed by the first mobility management network element in any one of the embodiments shown in FIG. 4 to FIG. 12A and FIG. 12B.

According to another aspect, an embodiment of this application provides a chip. The chip is used in a first LMF network element, the chip includes at least one processor and a communication interface, the communication interface is coupled to the at least one processor, and the processor is configured to run instructions, to implement the function performed by the first LMF network element in any one of the embodiments in FIG. 4 to FIG. 12A and FIG. 12B.

An embodiment of this application provides a communication system. The communication system includes a first LMF network element and a first mobility management network element. The first mobility management network element is configured to perform the function performed by the first mobility management network element in any one of the embodiments shown in FIG. 4 to FIG. 12A and FIG. 12B. The first LMF network element is configured to perform the function performed by the first LMF network element in any one of the embodiments in FIG. 4 to FIG. 12A and FIG. 12B.

In a possible embodiment, the communication system may further include a terminal. The terminal is configured to perform a function performed by the terminal in FIG. 8 to FIG. 12A and FIG. 12B.

An embodiment of this application provides a communication system. The communication system includes a session management network element and a second LMF network element. The session management network element is configured to perform a function performed by the SMF network element in FIG. 9A and FIG. 9B to FIG. 12A and FIG. 12B, and the second LMF network element is configured to perform a function performed by the LMF network element 300 in FIG. 7 to FIG. 12A and FIG. 12B.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and the accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope defined by the claims of this application and their equivalent technologies.

## Claims

1. A network element switching method, comprising:
obtaining, by a first mobility management network element, first information, wherein the first information is used to determine that a first user plane secure connection exists between a first location management function LMF network element and a terminal, and the first user plane secure connection is used to perform transmission of a message related to user plane locating between the first LMF network element and the terminal;
determining, by the first mobility management network element, that a location of the terminal is updated; and
when the location of the terminal is outside a service range of the first LMF network element, and the first information indicates that the first user plane secure connection exists, selecting, by the first mobility management network element, a second LMF network element for the terminal, wherein the terminal is located in a service range of the second LMF network element.

2. The method according to claim 1, wherein before the obtaining, by a first mobility management network element, first information, the method further comprises:
sending, by the first mobility management network element, a first request message to the first LMF network element, wherein the first request message is used to request the first LMF network element to locate the terminal, the first request message comprises a subscription request message and/or a locating dedicated data network name DNN of the terminal, and the subscription request message is used to request to subscribe to a status of a user plane secure connection between the first LMF network element and the terminal.

3. The method according to claim 1 or 2, wherein after the obtaining, by a first mobility management network element, first information, the method further comprises:
sending, by the first mobility management network element, a second request message to the first LMF network element, wherein the second request message is used to request a status of the first user plane secure connection between the terminal and the first LMF network element;
receiving, by the first mobility management network element, second information from the first LMF network element, wherein the second information indicates that the first user plane secure connection does not exist; and
based on the second information, updating, by the first mobility management network element, the first information to the second information, or deleting the first information.

4. The method according to any one of claims 1 to 3, wherein before the obtaining, by a first mobility management network element, first information, the method further comprises:
obtaining, by the first mobility management network element, user plane locating capability information of the terminal;
obtaining, by the first mobility management network element, subscription information of the terminal from a UDM network element serving the terminal, wherein the subscription information comprises the locating dedicated data network name DNN of the terminal; and
determining, by the first mobility management network element based on the user plane locating capability information and the locating dedicated data network name DNN, an LMF network element supporting the locating dedicated data network name DNN as the first LMF network element.

5. The method according to claim 4, wherein before the obtaining, by a first mobility management network element, first information, the method further comprises:
sending, by the first mobility management network element, a third request message to the first LMF network element, wherein the third request message is used to request the first LMF network element to perform user plane locating on the terminal, and the third request message comprises the locating dedicated data network name DNN.

6. The method according to any one of claims 1 to 5, wherein the obtaining, by a first mobility management network element, first information comprises:
obtaining, by the first mobility management network element, a context of the terminal from a second mobility management network element, wherein the context of the terminal comprises the first information, and the second mobility management network element is a network element that provides a service for the terminal before the terminal accesses the first mobility management network element; or
obtaining, by the first mobility management network element, the first information from the first LMF network element.

7. The method according to any one of claims 1 to 6, wherein before the obtaining, by a first mobility management network element, first information, the method further comprises:
obtaining, by the first mobility management network element, the user plane locating capability information of the terminal and the subscription information of the terminal, wherein the subscription information comprises the locating dedicated data network name DNN of the terminal, and the user plane locating capability information indicates that the terminal supports the user plane locating; and
sending, by the first mobility management network element, a fourth request message to the terminal based on the user plane locating capability information of the terminal and the subscription information of the terminal, wherein the fourth request message is used to trigger establishment of a locating dedicated PDU session between the terminal and the locating dedicated DNN.

8. The method according to any one of claims 1 to 7, wherein before the determining, by the first mobility management network element, that a location of the terminal is updated, the method further comprises:
storing, by the first mobility management network element, first user plane information of the terminal, wherein the first user plane information comprises the first information and an identifier of the first LMF network element.

9. The method according to claim 8, wherein the first information is at least one of first indication information and a user plane locating method indication;
the user plane locating method indication indicates to locate the terminal by using a user plane locating method; and
the first indication information indicates that the first user plane secure connection exists between the terminal and the first LMF network element.

10. The method according to any one of claims 1 to 9, wherein after the selecting, by the first mobility management network element, a second LMF network element for the terminal, the method further comprises:
receiving, by the first mobility management network element, a first notification message from the second LMF network element, wherein the first notification message notifies that a second user plane secure connection between the second LMF network element and the terminal is released; and
deleting, by the first mobility management network element, second user plane information of the terminal, wherein the second user plane information comprises the third information and an identifier of the second LMF network element, and the third information indicates that the second user plane secure connection exists between the second LMF network element and the terminal.

11. The method according to any one of claims 1 to 10, wherein the method further comprises:
sending, by the first mobility management network element, a second notification message to a session management network element accessed by the terminal, wherein the second notification message comprises information related to the second LMF network element, the second notification message is used to trigger the session management network element to determine whether the second LMF network element is reachable to a first user plane network element of the terminal, the information related to the second LMF network element comprises the identifier of the second LMF network element and/or information used to determine a UPF network element associated with the second LMF network element, and the first user plane network element corresponds to the first LMF network element.

12. The method according to any one of claims 1 to 10, wherein first configuration information is configured in the first mobility management network element, wherein the first configuration information indicates that a service range of an LMF network element serving the terminal falls within a service range of a user plane network element accessed by the terminal, and the selecting, by the first mobility management network element, a second LMF network element for the terminal comprises:
obtaining, by the first mobility management network element from the session management network element accessed by the terminal, information about a user plane network element selected by the session management network element for the terminal; and
determining, by the first mobility management network element based on the service range of the user plane network element, the LMF network element whose service range falls within the service range of the user plane network element as the second LMF network element.

13. The method according to any one of claims 1 to 12, wherein after the selecting, by the first mobility management network element, a second LMF network element for the terminal, the method further comprises:
sending, by the first mobility management network element, a fourth request message to the first LMF network element, wherein the fourth request message is used to request to transfer the first user plane secure connection with the terminal to the second LMF network element, and the fourth request message comprises information about the second LMF network element.

14. A communication method, applied to a first location management function LMF network element, wherein a first user plane secure connection exists between the first LMF network element and a terminal, and the method comprises:
locating, by the first LMF network element, a first locating service of the terminal through the first user plane secure connection; and
sending, by the first LMF network element, first information to a first mobility management network element accessed by the terminal, wherein the first information is used to determine that the first user plane secure connection exists between the terminal and the first LMF network element, and the first user plane secure connection is used to perform transmission of a message related to user plane locating between the first LMF network element and the terminal.

15. The method according to claim 14, wherein before the locating, by the first LMF network element, a first locating service of the terminal through the first user plane secure connection, the method further comprises:
receiving, by the first LMF network element, a first request message from the first mobility management network element, wherein the first request message is used to request the first LMF network element to locate the terminal, the first request message comprises information about a locating dedicated data network of the terminal and/or a subscription request message, and the first subscription request message indicates that the first mobility management network element requests to subscribe to a status of a user plane secure connection between the first LMF network element and the terminal.

16. The method according to claim 14 or 15, wherein after the sending, by the first LMF network element, first information to a first mobility management network element accessed by the terminal, the method further comprises:
receiving, by the first LMF network element, a second request message from the first mobility management network element, wherein the second request message is used to request a status of the first user plane secure connection between the first LMF network element and the terminal.

17. The method according to any one of claims 14 to 16, wherein the method further comprises:
before the first LMF network element establishes the first user plane secure connection with the terminal, sending, by the first LMF network element to the terminal, a first identifier allocated to the terminal, wherein the first identifier is used to identify the terminal; and
establishing, by the first LMF network element, the first user plane secure connection with the terminal based on the first identifier.

18. The method according to any one of claims 14 to 17, wherein the first information is at least one of first indication information and a user plane locating method indication;
the user plane locating method indication indicates to locate the terminal by using a user plane locating method; and
the first indication information indicates that the first user plane secure connection exists between the terminal and the first LMF network element.

19. The method according to any one of claims 14 to 18, wherein the method further comprises:
determining, by the first LMF network element, information about a second LMF network element serving the terminal; and
sending, by the first LMF network element, a fifth request message to the second LMF network element, wherein the fifth request message comprises a subscription request message of the first mobility management network element, and the subscription request message indicates that the first mobility management network element requests to subscribe to a status of a user plane secure connection between the second LMF network element and the terminal.

20. The method according to claim 19, wherein the determining, by the first LMF network element, information about a second LMF network element serving the terminal comprises:
receiving, by the first LMF network element, a fourth request message from the first mobility management network element, wherein the fourth request message is used to request to transfer a context of the first user plane secure connection to the second LMF network element, and the fourth request message comprises the information about the second LMF network element; or
determining, by the first LMF network element based on a user plane context of the terminal, the information about the second LMF network element serving the terminal.

21. The method according to any one of claims 14 to 20, wherein the first locating service is a locating service of a reachable event type of the terminal.

22. A computer-readable storage medium, wherein the readable storage medium stores instructions, and when the instructions are executed, the method according to any one of claims 1 to 13 is implemented or the method according to any one of claims 14 to 21 is implemented.

23. A chip, wherein the chip comprises a processor and a communication interface, the communication interface is coupled to the processor, the processor is configured to run a computer program or instructions to implement the method according to any one of claims 1 to 13 or the method according to any one of claims 14 to 21, and the communication interface is configured to communicate with another module outside the chip.

24. A communication apparatus, comprising at least one processor, wherein the at least one processor is coupled to a memory, and the at least one processor is configured to run instructions stored in the memory to perform the method according to any one of claims 1 to 13 or the method according to any one of claims 14 to 21.

25. A communication system, comprising a mobility management network element and an LMF network element, wherein the LMF network element is configured to perform the method according to any one of claims 14 to 21, and the mobility management network element is configured to perform the method according to any one of claims 1 to 13.
